# EUROPEAN PATENT SPECIFICATION

(11) **EP 4 631 811 B1**
(45) Date of publication and mention of the grant of the patent: **07.10.2026**
(21) Application number: 24777530.7
(22) Date of filing: 05.02.2024
(51) Int. Cl.: B60W 20/20, B60W 10/02, B60W 10/06, B60W 10/08, B60W 40/00, B60K 6/387, B60K 6/442

(54) **METHOD, APPARATUS AND VEHICLE FOR CONTROLLING SWITCHING BETWEEN SERIES/PARALLEL DRIVING MODES OF A HYBRID VEHICLE**
VERFAHREN, VORRICHTUNG UND FAHRZEUG ZUR STEUERUNG DES UMSCHALTENS ZWISCHEN SERIELL-/PARALLELEM FAHRMODUS EINES HYBRIDFAHRZEUGS
PROCÉDÉ, APPAREIL ET VÉHICULE POUR COMMANDER LA COMMUTATION ENTRE UN MODE DE CONDUITE EN SÉRIE/PARALLÈLE D'UN VÉHICULE HYBRIDE

(30) Priority: 31.03.2023 CN 202310340455
(43) Date of publication of application: 15.10.2025
(73) Proprietor: Chongqing Changan Automobile Co., Ltd., Chongqing 400023 (CN)
(72) Inventor: WANG, Bozhou, Chongqing 400023 (CN); ZHANG, Caigan, Chongqing 400023 (CN); LI, Mengna, Chongqing 400023 (CN)
(74) Representative: Keller Schneider Patent- und Markenanwälte AG
(86) International application number: PCT/CN2024/076145
(87) International publication number: WO 2024/198736

(56) References cited:
- WO-A1-2022/183549
- CN-A- 113 335 262
- CN-A- 113 335 262
- CN-A- 114 394 080
- CN-A- 114 394 080
- CN-A- 114 407 864
- CN-A- 115 230 676
- CN-A- 115 230 676
- CN-A- 116 394 917
- KR-B1- 101 500 245
- US-B2- 8 930 098

## Description

### FIELD OF TECHNOLOGY

The present application relates to the field of control of hybrid electric vehicles, and in particular to a method and apparatus for controlling switching between series and parallel driving modes of a hybrid vehicle, a vehicle, a device and a medium.

### BACKGROUND

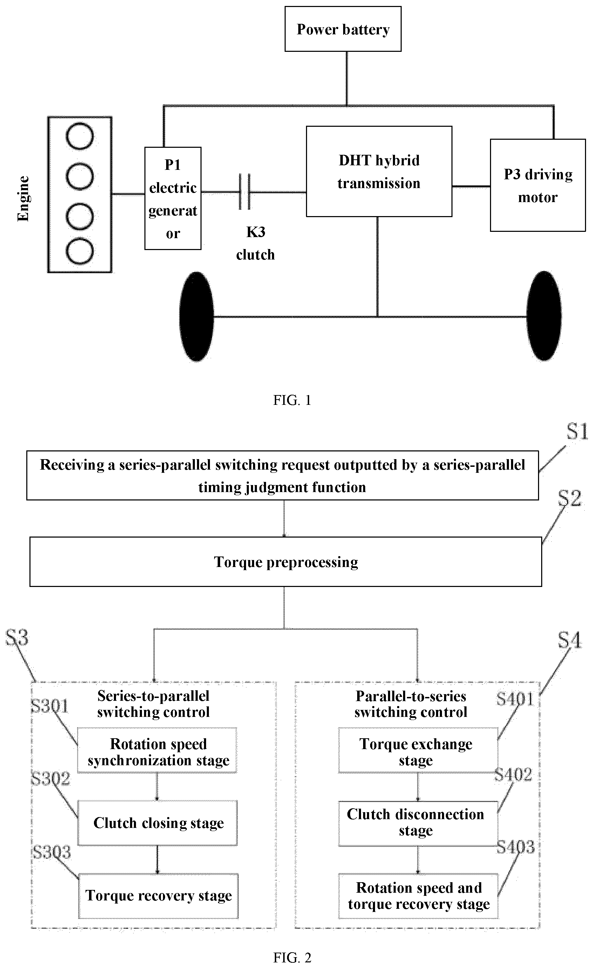

In recent years, in the face of a petroleum energy crisis and increasingly strict fuel consumption regulations, hybrid vehicles have become a research focus for major manufacturers. A P13 configuration, as a representative of a hybrid configuration easy to implement, has been studied more and more. As shown in FIG. 1, when the vehicle is at a low speed, a K3 clutch is disconnected, the whole vehicle works in a series driving mode, an engine does not directly participate in driving, electricity is generated by a P1 electric generator, and a P3 driving motor obtains electric energy from a power battery or the P1 electric generator to drive. When the vehicle is at a medium or high speed, the K3 clutch is closed, the whole vehicle works in a parallel driving mode, the engine directly participates in driving, the P3 motor assists in adjusting a working point of the engine to ensure that the engine is in an economic zone with low fuel consumption. Based on the demands of the vehicle for the economy and the dynamic property, an optimal driving mode is selected according to a state of the vehicle. A typical series-parallel driving mode switching process needs the coordination of rotation speeds and torques of the engine, the P1 electric generator and the P3 driving motor, and the control on the K3 clutch. This process is complicated and has been studied more and more.

Chinese patent No. CN113335262A discloses a method for controlling switching between driving modes of a hybrid electric vehicle, a vehicle and a storage medium. This patent provides a series-to-parallel switching control method, including: adjusting an engine torque to a target torque of an engine in a parallel driving mode, adjusting a rotation speed of the engine to be the same as a rotation speed of a driving motor in a series driving mode, engaging a clutch, and reducing a torque of an electric generator to 0 and reducing a torque of the driving motor by a same torque reduction magnitude of the electric generator. The method for controlling parallel-to-series switching includes: increasing a negative torque of the electric generator to absorb the engine torque, adjusting the torque of the driving motor to a target torque in the series driving mode, disengaging the clutch, and adjusting the engine torque and rotation speed to a target torque and a target rotation speed in the series driving mode.

US 8,930,098 B2 discloses a clutch control device of a hybrid vehicle which acquires possible battery output and which sets a change of vehicle velocity depending on the possible battery output. The clutch control device changes the driving mode of the hybrid vehicle when the velocity of the hybrid vehicle is in the change vehicle velocity by altering the engaged state of a clutch of the hybrid vehicle.

CN 115230676 B describes a series-parallel connection switching method for a hybrid vehicle. When the vehicle meets a preset switching condition of a target driving mode, a clutch of the hybrid vehicle is controlled to be switched off or switched on according to the target driving mode.

Although the above solution provides the basic control method of a series-parallel switching process, there are obviously the following problems: 1. type selection and matching of the engine and the electric generator are not considered. For example, the target torque of the engine in the parallel driving mode exceeds a maximum electricity-generating torque of the P1 electric generator, and the target torque of the engine cannot be adjusted to a target torque of the engine in the parallel driving mode at the beginning of series-to-parallel switching; the P1 electric generator cannot absorb a negative torque of the engine in the parallel driving mode at the beginning of parallel-to-series switching, which leads to a failure of series-parallel switching. 2. When the P1 electric generator generates electricity at its maximum capacity, neither the speed can be adjusted, nor the series-parallel switching can be completed. 3. Unexpected acceleration and deceleration of the vehicle caused by the torque transmission characteristic during clutch closing and disconnection are not considered.

### SUMMARY

The present application provides a method and apparatus for controlling switching between series and parallel driving modes of a hybrid vehicle, a vehicle, a device and a medium, so as to solve the problems that the series-parallel switching cannot be completed and unexpected acceleration and deceleration of the vehicle occur during the series-parallel switching since selected types of an engine and a P1 electric generator are not matched and a speed of the P1 electric generator cannot be adjusted.

The technical solutions of the present application are as follows.

The present application provides a method for controlling switching between series and parallel driving modes of a hybrid vehicle, wherein a hybrid system of the hybrid vehicle at least comprises a power battery, an engine, a driving motor, an electric generator and a clutch, wherein the engine can be connected to or disconnected from a wheel end by means of the clutch, the driving motor is directly connected to the wheel end, the driving motor is connected to the power battery, the electric generator is connected to the engine, the electric generator is connectable to the power battery and/or the driving motor. The method comprises:
reading relevant parameters of the vehicle and a current driving mode of the vehicle when receiving a series-parallel switching request;
performing target torque preprocessing on the engine, the electric generator and the driving motor based on the current driving mode of the vehicle and the relevant parameters of the vehicle;
identifying a target driving mode of the vehicle based on the received series-parallel switching request; and
performing, after the torque preprocessing is completed, switching control between series and parallel driving modes of the vehicle according to the relevant parameters, the current driving mode and the target driving mode of the vehicle.

The relevant parameters of the vehicle comprise: a vehicle speed, an accelerator pedal opening degree, an actual torque of the engine, an actual torque of the electric generator, a current target torque of the engine, a current target torque of the electric generator, a current target torque of the driving motor, a maximum electricity-generating torque of the electric generator, a maximum torque of the engine, an engine-to-electric generator speed ratio, an electric generator-to-driving motor speed ratio, a driving motor-to-wheel end speed ratio and an oil pressure of the clutch; and the step of performing the target torque preprocessing on the engine, the electric generator and the driving motor based on the current driving mode of the vehicle and the relevant parameters of the vehicle comprises:
determining a maximum available torque of the engine during series-parallel switching based on the maximum electricity-generating torque of the electric generator and the maximum torque of the engine;
determining a target torque of the engine and a target torque of the electric generator during the series-parallel switching based on the current driving mode of the vehicle, the maximum available torque of the engine during the series-parallel switching and the current target torque of the engine;
updating a value of the current target torque of the engine and a value of the current target torque of the electric generator based on the current driving mode of the vehicle, and the target torque of the engine and the target torque of the electric generator during the series-parallel switching; and
determining a target torque of the driving motor during the series-parallel switching based on a driver required torque, the driving motor-to-wheel end speed ratio, the engine-to-electric generator speed ratio, the electric generator-to-driving motor speed ratio, the actual torque of the engine, the actual torque of the electric generator and the oil pressure of the clutch, and updating a value of the current target torque of the driving motor;
wherein, the driver required torque is obtained by performing a lookup operation in a table according to the vehicle speed and the accelerator pedal opening degree.

Optionally, a smaller value selected from an absolute value of the maximum electricity-generating torque of the electric generator and the maximum torque of the engine is determined, and then a sum of the selected smaller value and a first preset torque value is determined to be the maximum available torque of the engine during the series-parallel switching;
a smaller value selected from the maximum available torque of the engine during the series-parallel switching and the current target torque of the engine is determined to be the target torque of the engine during the series-parallel switching;
if the current driving mode of the vehicle is a parallel driving mode, the target torque of the electric generator during the series-parallel switching is determined to be 0; and
if the current driving mode of the vehicle is a series driving mode, the target torque of the electric generator during the series-parallel switching is determined to be the actual torque of the electric generator.

Optionally, the target driving mode comprises a parallel driving mode; the relevant parameters of the vehicle comprise: an actual torque of the engine, an actual rotation speed of the electric generator, an actual torque of the electric generator, an actual oil pressure of the clutch, a current target rotation speed of the electric generator, as well as a target torque of the engine, a target torque of the electric generator, a target torque of the driving motor and a target rotation speed of the electric generator that are outputted by a torque distribution module of the vehicle in the parallel driving mode; and if the target driving mode is the parallel driving mode, the step of performing switching control between series and parallel driving modes of the vehicle according to the relevant parameters, the current driving mode and the target driving mode of the vehicle comprises:
proceeding to an electric generator rotation speed synchronization stage, wherein the actual torque of the electric generator is set to be the target torque of the electric generator and the current target rotation speed of the electric generator is gradually adjusted to a target synchronous rotation speed of the electric generator;
when an absolute value of a difference between the target synchronous rotation speed of the electric generator and the actual rotation speed of the electric generator becomes less than a first preset rotation speed value in the electric generator rotation speed synchronization stage, proceeding to a clutch closing stage for clutch closing control; and
when the actual oil pressure of the clutch becomes greater than or equal to a first preset oil pressure after the clutch closing control is completed, proceeding to a torque recovery stage, wherein an electric generator control mode is converted from rotation speed control to torque control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the parallel driving mode.

Optionally, the relevant parameters of the vehicle comprise: a vehicle speed, an electric generator-to-wheel end speed ratio and a tire diameter, wherein the target synchronous rotation speed of the electric generator is calculated by the following formula: ${P 1 Spd}_{Syn} = \frac{VehSpd ∗ 1000 ∗ P 1 Ratio}{60 πD}$ where, VehSpd is the vehicle speed, P1Ratio is the electric generator-to-wheel end speed ratio, and D is the tire diameter.

Optionally, the target driving mode comprises a series driving mode; the relevant parameters of the vehicle comprise: an actual torque of the engine, an actual torque of the electric generator, an actual rotation speed of the electric generator, an actual oil pressure of the clutch, an engine-to-electric generator speed ratio, as well as a target torque of the engine, a target torque of the electric generator, a target torque of the driving motor and a target rotation speed of the electric generator that are outputted by a torque distribution module of the vehicle in the series driving mode; and if the target driving mode is the series driving mode, the step of performing switching control between series and parallel driving modes of the vehicle according to the relevant parameters, the current driving mode and the target driving mode of the vehicle comprises:
proceeding to a torque exchange stage wherein a target torque of the electric generator is gradually increased from the target torque of the electric generator during the series-parallel switching to a negative value of the target torque of the engine during the series-parallel switching multiplied by the engine-to-electric generator speed ratio, and at the same time the target torque of the driving motor is adjusted to follow the change so as to meet a driver required torque, and the actual rotation speed of the electric generator is set to be the target rotation speed of the electric generator during the series-parallel switching;
when an absolute value of a sum of the actual torque of the engine and the actual torque of the electric generator becomes less than or equal to a sixth preset torque value in the torque exchange stage, proceeding to a clutch disconnection stage for clutch disconnection control; and
when the actual oil pressure of the clutch becomes less than or equal to a second preset oil pressure after the clutch disconnection control is completed, proceeding to a rotation speed and torque recovery stage, wherein an electric generator control mode from torque control to the rotation speed control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the series driving mode.

Optionally, after adjusting the values of the target torque of the engine, the target torque of the electric generator, the target torque of the driving motor and the target rotation speed of the electric generator, the method further comprises:
if an absolute value of a difference between the target torque of the engine outputted by the torque distribution module of the vehicle in the parallel driving mode and the actual torque of the engine is less than or equal to a second preset torque value, an absolute value of a difference between the target torque of the electric generator outputted by the torque distribution module of the vehicle in the parallel driving mode and the actual torque of the electric generator is less than or equal to a third preset torque value, and an absolute value of a difference between the target torque of the driving motor outputted by the torque distribution module of the vehicle in the parallel driving mode and the actual torque of the driving motor is less than or equal to a fourth preset torque value, determining that the switching of the vehicle from the series driving mode to the parallel driving mode is completed.

Optionally, the target torque P3TqReq of the driving motor during the series-parallel switching is calculated by the following formula: 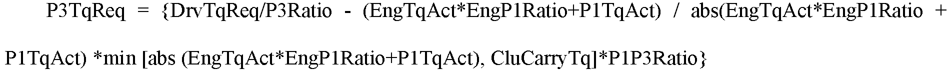 P3TqReq = {DrvTqReq/P3Ratio - (EngTqAct*EngP1Ratio+P1TqAct) / abs(EngTqAct*EngP1Ratio + P1TqAct) *min [abs (EngTqAct*EngP1Ratio+P1TqAct), CluCarryTq]*P1P3Ratio} where, DrvTqReq is the driver required torque, which is obtained by performing a lookup operation in a table according to the vehicle speed and the accelerator pedal opening degree; P3Ratio is the driving motor-to-wheel end speed ratio; EngTqAct is the actual torque of the engine; EngP1Ratio is the engine-to-electric generator speed ratio; P1TqAct is the actual torque of the electric generator; P1P3Ratio is the electric generator-to-driving motor speed ratio; CluCarryTq is a transmissible torque of the clutch; wherein the transmissible torque CluCarryTq of the clutch is obtained by performing a lookup operation in a table based on a clutch oil pressure characteristic curve characterizing an association relationship between an actual oil pressure of the clutch and the transmissible torque CluCarryTq of the clutch.

Optionally, after adjusting the target torque of the engine, the target torque of the electric generator, the target torque of the driving motor and the target rotation speed of the electric generator, the method further comprises:
if an absolute value of a difference between the target torque of the engine outputted by the torque distribution module of the vehicle in the series driving mode and the actual torque of the engine is less than or equal to an eighth preset torque value, an absolute value of a difference between the target rotation speed of the electric generator outputted by the torque distribution module of the vehicle in the series driving mode and the actual rotation speed of the electric generator is less than or equal to an eighth preset rotation speed value, and an absolute value of a difference between the target torque of the driving motor outputted by the torque distribution module of the vehicle in the series driving mode and the actual torque of the driving motor is less than or equal to a ninth preset torque value, determining that the switching of the vehicle from the parallel driving mode to the series driving mode is completed.

The present application also provides an apparatus for controlling switching between series and parallel driving modes of a hybrid vehicle, wherein a hybrid system of the hybrid vehicle at least comprises a power battery, an engine, a driving motor, an electric generator and a clutch, wherein the engine can be connected to or disconnected from a wheel end by means of the clutch, the driving motor is directly connected to the wheel end, the driving motor is connected to the power battery, the electric generator is connected to the engine, the electric generator is connectable to the power battery and/or the driving motor. The apparatus comprises:
a parameter reading module configured to read relevant parameters of the vehicle and a current driving mode of the vehicle when receiving a series-parallel switching request;
a torque preprocessing module configured to perform target torque preprocessing on the engine, the electric generator and the driving motor based on the current driving mode of the vehicle and the relevant parameters of the vehicle;
a target driving mode identification module configured to identify a target driving mode of the vehicle based on the received series-parallel switching request; and
a driving mode switching control module configured to perform, after the torque preprocessing is completed, switching control between series and parallel driving modes of the vehicle according to the relevant parameters, the current driving mode and the target driving mode of the vehicle.

The relevant parameters of the vehicle comprise: a vehicle speed, an accelerator pedal opening degree, an actual torque of the engine, an actual torque of the electric generator, a current target torque of the engine, a current target torque of the electric generator, a current target torque of the driving motor, a maximum electricity-generating torque of the electric generator, a maximum torque of the engine, an engine-to-electric generator speed ratio, an electric generator-to-driving motor speed ratio, a driving motor-to-wheel end speed ratio and an oil pressure of the clutch; and the torque preprocessing module comprises:
an engine maximum available torque determining unit configured to determine a maximum available torque of the engine during series-parallel switching based on the maximum electricity-generating torque of the electric generator and the maximum torque of the engine;
an engine and electric generator target torque determining unit configured to determine a target torque of the engine and a target torque of the electric generator during the series-parallel switching based on the current driving mode of the vehicle, the maximum available torque of the engine during the series-parallel switching and the current target torque of the engine;
an engine and electric generator target torque value updating unit configured to update a value of the current target torque of the engine and a value of the current target torque of the electric generator based on the current driving mode of the vehicle, and the target torque of the engine and the target torque of the electric generator during the series-parallel switching; and
a driving motor target torque determining and value updating unit configured to determine a target torque of the driving motor during the series-parallel switching based on a driver required torque, the driving motor-to-wheel end speed ratio, the engine-to-electric generator speed ratio, the electric generator-to-driving motor speed ratio, the actual torque of the engine, the actual torque of the electric generator and the oil pressure of the clutch, and updating a value of the current target torque of the driving motor;
wherein, the driver required torque is obtained by performing a lookup operation in a table according to the vehicle speed and the accelerator pedal opening degree.

Optionally, the target driving mode comprises a parallel driving mode; the relevant parameters of the vehicle comprise: an actual torque of the engine, an actual rotation speed of the electric generator, an actual torque of the electric generator, an actual oil pressure of the clutch, a current target rotation speed of the electric generator, as well as a target torque of the engine, a target torque of the electric generator, a target torque of the driving motor and a target rotation speed of the electric generator that are outputted by a torque distribution module of the vehicle in the parallel driving mode; and if the target driving mode is the parallel driving mode, the driving mode switching control module comprises:
an electric generator rotation speed synchronization unit configured to proceed to an electric generator rotation speed synchronization stage, wherein the actual torque of the electric generator is set to be the target torque of the electric generator and the current target rotation speed of the electric generator is gradually adjusted to a target synchronous rotation speed of the electric generator;
a clutch closing unit configured to: when an absolute value of a difference between the target synchronous rotation speed of the electric generator and the actual rotation speed of the electric generator becomes less than a first preset rotation speed value in the electric generator rotation speed synchronization stage, proceed to a clutch closing stage for clutch closing control; and
a torque recovery unit configured to: when the actual oil pressure of the clutch becomes greater than or equal to a first preset oil pressure after the clutch closing control is completed, proceed to a torque recovery stage, wherein an electric generator control mode is converted from rotation speed control to torque control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the parallel driving mode.

Optionally, the target driving mode comprises a series driving mode; the relevant parameters of the vehicle comprise: an actual torque of the engine, an actual torque of the electric generator, an actual rotation speed of the electric generator, an actual oil pressure of the clutch, an engine-to-electric generator speed ratio, as well as a target torque of the engine, a target torque of the electric generator, a target torque of the driving motor and a target rotation speed of the electric generator that are outputted by a torque distribution module of the vehicle in the series driving mode; and if the target driving mode is the series driving mode, the driving mode switching control module comprises: a torque exchange unit configured to proceed to a torque exchange stage wherein a target torque of the electric generator is gradually increased from the target torque of the electric generator during the series-parallel switching to a negative value of the target torque of the engine during the series-parallel switching multiplied by the engine-to-electric generator speed ratio and at the same time the target torque of the driving motor is adjusted to follow the change so as to meet a driver required torque, and the actual rotation speed of the electric generator is set to be the target rotation speed of the electric generator during the series-parallel switching;
a clutch disconnection unit configured to: when an absolute value of a sum of the actual torque of the engine and the actual torque of the electric generator becomes less than or equal to a sixth preset torque value in the torque exchange stage, proceed to a clutch disconnection stage for clutch disconnection control; and
a rotation speed and torque recovery unit configured to: when the actual oil pressure of the clutch becomes less than or equal to a second preset oil pressure after the clutch disconnection control is completed, proceed to a rotation speed and torque recovery stage, wherein an electric generator control mode is converted from torque control to rotation speed control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the series driving mode.

The present application also provides a vehicle comprising the apparatus for controlling switching between series and parallel driving modes of a hybrid vehicle mentioned above.

The present application has the following beneficial effects.

When the series-parallel switching request is received, in order to avoid the problem that updating to a target torque or rotation speed of the target driving mode cannot be realized and the speed cannot be adjusted since selected types of the engine and the electric generator are not matched, especially to avoid a situation that the target torque of the engine exceeds a coupling boundary capacity of the engine and the electric generator when the vehicle runs in the parallel driving mode, this solution proposes to preprocess the target torque of the engine and the target torque of the electric generator before the series-parallel switching is performed; by calculating the coupling boundary between the engine and the electric generator, and performing reserved torque processing on the coupling boundary for adjusting the rotation speed, the target torque of the engine and the target torque of the electric generator are limited as the target torques in the series-parallel switching process by using the processed coupling boundary; and at the same time, the target torque of the driving motor is also adjusted adaptively to ensure the driver required torque. Through the above solution, the problems that the updating to the target torque of the target driving mode during the series-parallel switching cannot be realized and the speed cannot be adjusted in the series-parallel switching process can be completely solved. In addition, in oil charging and discharging processes of the clutch, the torque transmission characteristic of the clutch is considered in calculation of a target torque of a power source, so that the calculation of the target torque of the power source is more reasonable and practical, and the problem of unexpected acceleration and deceleration of the vehicle caused by ignoring a fact that an actual torque of the power source is outputted to the vehicle in the oil charging and discharging processes of the clutch is avoided.

### BRIEF DESCRIPTION OF THE DRAWINGS

FIG. 1 is a schematic diagram of a P13 configuration in this embodiment;
FIG. 2 is a flowchart of a method in this embodiment; and
FIG. 3 is a structural block diagram of an apparatus in this embodiment.

### DESCRIPTION OF THE EMBODIMENTS

Embodiments of the present application will be described below with reference to the attached drawings and preferred embodiments, and those skilled in the art can easily understand other advantages and effects of the present application from the disclosure in this description. The present application may also be implemented or applied by other different specific embodiments, and various details in this description may be modified or changed based on different viewpoints and applications without departing from the spirit of the present application. It should be understood that the preferred embodiments are only for illustrating the present application, and are not intended to limit the protection scope of the present application.

It should be noted that the drawings provided in the following embodiments are only for schematically illustrating the basic idea of the present application, and the drawings only show the components related to the present application rather than being drawn according to the numbers, shapes and sizes of the components in practical implementation, and the shapes, numbers and proportions of the components in practical implementation can be changed freely, and the layout of the components may be more complicated.

Referring to FIG. 1, a method for controlling switching between series and parallel driving modes of a hybrid vehicle provided in this embodiment is mainly suitable for a hybrid vehicle with the following features. The hybrid vehicle at least includes a power battery, an engine, a driving motor, an electric generator and a clutch, wherein the engine can be connected to or disconnected from a wheel end by means of the clutch, the driving motor is directly connected to the wheel end, the driving motor is connected to the power battery, the electric generator is connected to the engine, the electric generator is connectable to the power battery and/or the driving motor. Specifically, for a hybrid vehicle with a P13 configuration in FIG. 1, the electric generator refers to a P1 electric generator in FIG. 1, the driving motor refers to a P3 motor in FIG. 1, and the clutch refers to a K3 clutch in FIG. 1; and for the hybrid vehicle with the P13 configuration, the P1 electric generator is connected to both the power battery and the P3 driving motor. In this embodiment, the hybrid vehicle may also be applied to vehicles of other configurations, as long as the vehicles of these configurations have the above-mentioned specific features.

As shown in FIG. 2, a method for controlling switching between series and parallel driving modes of a hybrid vehicle provided in this embodiment specifically includes:
Step S1: reading relevant parameters of the vehicle and a current driving mode of the vehicle when receiving a series-parallel switching request outputted by a series-parallel timing judgment function;
Step S2: proceeding to torque preprocessing based on the relevant parameters of the vehicle and the current driving mode of the vehicle, and after the step S2 is completed, proceeding to step S3 or S4;
Step S3: if the series-parallel switching request is a series-to-parallel switching request, proceeding to series-to-parallel switching control, wherein, specifically, based on the received series-parallel switching request, a target driving mode of the vehicle is identified as a parallel driving mode, and after the torque preprocessing is completed, the vehicle is controlled to switch from a series driving mode to the parallel driving mode according to the relevant parameters, the current driving mode and the target driving mode of the vehicle; and
Step S4: if the series-parallel switching request is a parallel-to-series switching request, proceeding to parallel-to-series switching control, wherein, specifically, based on the received series-parallel switching request, a target driving mode of the vehicle is identified as a series driving mode, and after the torque preprocessing is completed, the vehicle is controlled to switch from the parallel driving mode to the series driving mode according to the relevant parameters, the current driving mode and the target driving mode of the vehicle.

In this embodiment, the series-parallel switching request is specifically the series-to-parallel switching request or the parallel-to-series switching request, and the output of this request is implemented by the prior art.

In this embodiment, for the series-parallel switching timing judgment function in the step S1, specifically, the series-parallel switching request can be outputted with comprehensive consideration of the economy and the dynamic property of the vehicle according to a vehicle state and demands of a driver, and the series-parallel switching request can be a request obtained by using the prior art (such as the method introduced in the background), and information specifically carried in a series-parallel switching request signal can be a parallel-to-series switching request that the vehicle needs to enter the series driving mode from the parallel driving mode or a series-to-parallel switching request that the vehicle needs to enter the parallel driving mode from the series driving mode.

In this embodiment, a process of torque preprocessing in the step S2 may specifically include: determining a maximum available torque of the engine during series-parallel switching based on the maximum electricity-generating torque of the electric generator and the maximum torque of the engine; determining a target torque of the engine and a target torque of the electric generator during the series-parallel switching based on the current driving mode of the vehicle, the maximum available torque of the engine during the series-parallel switching and a current target torque of the engine; updating a value of the current target torque of the engine and a value of the current target torque of the electric generator based on the current driving mode of the vehicle, and the target torque of the engine and the target torque of the electric generator during the series-parallel switching; and determining a target torque of the driving motor during the series-parallel switching based on a driver required torque, the driving motor-to-wheel end speed ratio, the engine-to-electric generator speed ratio, the electric generator-to-driving motor speed ratio, the actual torque of the engine, the actual torque of the electric generator and the oil pressure of the clutch, and updating a value of the current target torque of the driving motor. The relevant parameters of the vehicle comprise: a vehicle speed, an accelerator pedal opening degree, an actual torque of the engine, an actual torque of the electric generator, a current target torque of the engine, a current target torque of the electric generator, a current target torque of the driving motor, a maximum electricity-generating torque of the electric generator, a maximum torque of the engine, an engine-to-driving motor speed ratio, an electric generator-to-driving motor speed ratio, a driving motor-to-wheel end speed ratio and an oil pressure of the clutch.

In this embodiment, EngTqMaxSPC is a maximum available torque of the engine during series-parallel switching, and its calculation formula is as follows: $EngTqMaxSPC = min \left(\left[EngTqMax,abs\left(P1GenTqMax\right)\right]\right) - TBD 1$ where, EngTqMax is the maximum torque of the engine, P1GenTqMax is the maximum electricity-generating torque of the electric generator (in this embodiment, a maximum electricity-generating torque of the P1 electric generator with the P13 configuration), and TBD1 is a calibration value.

Further, EngTqReqSPC is the target torque of the engine during the series-parallel switching, and its specific calculation formula is as follows: $EngTqReqSPC = min \left(EngTqReq, EngTqMaxSPC\right)$ where, EngTqReq is the current target torque of the engine.

The target torque P3TqReq of the driving motor during the series-parallel switching is calculated by the following formula: 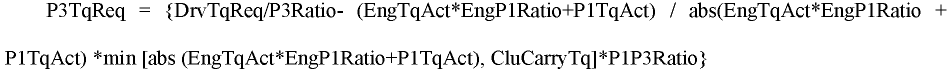 P3TqReq = {DrvTqReq/P3Ratio- (EngTqAct*EngP1Ratio+P1TqAct) / abs(EngTqAct*EngP1Ratio + P1TqAct) *min [abs (EngTqAct*EngP1Ratio+P1TqAct), CluCarryTq]*P1P3Ratio} where, DrvTqReq is the driver required torque, which is obtained by performing a lookup operation in a table according to the vehicle speed and the accelerator pedal opening degree; P3Ratio is the driving motor-to-wheel end speed ratio; EngTqAct is the actual torque of the engine; EngP1Ratio is the engine-to-electric generator speed ratio; P1TqAct is the actual torque of the electric generator; P1P3Ratio is the electric generator-to-driving motor speed ratio; CluCarryTq is a transmissible torque of the clutch; wherein the transmissible torque CluCarryTq of the clutch is obtained by performing a lookup operation in a table based on a clutch oil pressure characteristic curve characterizing an association relationship between an actual oil pressure of the clutch and the transmissible torque CluCarryTq of the clutch.

In the step S3, the target driving mode of the vehicle is identified as the parallel driving mode based on the received series-parallel switching request.

A specific process of series-parallel driving mode switching control is as follows: performing switching control between series and parallel driving modes of the vehicle according to the relevant parameters, the current driving mode and the target driving mode of the vehicle.

As shown in FIG. 2, this step S3 specifically includes the following steps:
(S301) a rotation speed synchronization stage. Specifically, the target torque of the engine during the series-parallel switching, the target torque of the electric generator during the series-parallel switching, the target torque of the driving motor during the series-parallel switching are obtained according to the calculation method described in the step S2; the target rotation speed of the electric generator is gradually adjusted from the current target rotation speed of the electric generator to the target synchronous rotation speed of the electric generator during the series-parallel switching; the target synchronous rotation speed of the electric generator during the series-parallel switching is calculated from the vehicle speed, the electric generator-to-wheel end speed ratio and the tire diameter; and in an adjustment process, the smoothness of the target rotation speed should be ensured, and the implementation is not specifically required, such as a slope restriction.

If the following formula is satisfied, the process proceeds to step (302): $\left|P1SpsReqsyn-P1SpdAct\right| ⩽ TBD 2$ where, P1Spd_{Syn} is an electric generator target synchronous rotation speed during the series-parallel switching (in this embodiment, it is a target synchronous rotation speed of the P1 electric generator with the P13 configuration), P1SpdAct is an actual rotation speed of the P1 electric generator, and TBD2 is a calibration value (a first preset rotation speed value), such as 50 rpm.

Further, for the target synchronous rotation speed of the electric generator P1Spd_{Syn} during the series-parallel switching, its calculation formula is as follows: ${P 1 Spd}_{Syn} = \frac{VehSpd ∗ 1000 ∗ P 1 Ratio}{60 πD}$
where, VehSpd is the vehicle speed, P1Ratio is the electric generator-to-wheel end speed ratio, and D is the tire diameter.
(S302) A clutch closing stage. Specifically, a solenoid valve of the clutch is opened, and after a hydraulic module is charged with oil, clutch closing is completed.

The target torque of the engine and the target torque of the electric generator during the series-parallel switching are obtained according to the calculation method described in the step S2, and the target rotation speed of the electric generator during the series-parallel switching is obtained according to the calculation method described in the step S301.

If the following formula is satisfied, the process proceeds to step (S303): $CluPrsAct ⩾ TBD 3$ where, CluPrsAct is the actual oil pressure of the clutch (obtained by a transmission control unit) and TBD3 is a calibration value (a first preset oil pressure), such as 10 bars.

(S303) A torque recovery stage. Specifically, an electric generator control mode is adjusted from rotation speed control to torque control, values of the target torque of the engine and the target torque of the electric generator during the series-parallel switching calculated according to the method described in the step S2, the target torque of the driving motor during the series-parallel switching calculated according to the method described in the step S302, and the target rotation speed of the electric generator during the series-parallel switching calculated according to the method described in the step S301 are respectively adjusted to values of the target torques and the target rotation speed of the electric generator that are outputted by a torque distribution module of the vehicle in the parallel driving mode; and in an adjustment process, the smoothness of the target torques should be ensured, and the implementation is not specifically required, such as a slope restriction.

Further, if the following formula (a), formula (b) and formula (c) are satisfied at the same time, the series-to-parallel switching flow ends. $\left|EngTqReqPHEV-EngTqAct\right| ⩽ TBD 4$ (a) $\left|P1TqReqPHEV-P1TqAct\right| \leq TBD 5$ (b) $\left|P3TqReqPHEV-P3TqAct\right| \leq TBD 6$ (c)

EngTqReqPHEV, P1TqReqPHEV and P3TqReqPHEV are respectively the target torque of the engine, the target torque of the electric generator (a target torque of the P1 electric generator with the P13 configuration in this embodiment) and the target torque of the driving motor (a target torque of a P3 driving motor with the P13 configuration in this embodiment) that are outputted by a torque distribution function in the parallel driving mode; EngTqAct, P1TqAct and P3TqAct are respectively the actual torque of the engine, the actual torque of the electric generator (an actual torque of the P1 electric generator with the P13 configuration in this embodiment) and the actual torque of the driving motor (an actual torque of the P13 driving motor with the P13 configuration in this embodiment); TBD4 is a calibration value (corresponding to a second preset torque value), such as 5Nm; TBD5 is a calibration value (corresponding to a third preset torque value), such as 5 Nm; and TBD6 is a calibration value (corresponding to a fourth preset torque value), such as 5 Nm.

That is to say, if an absolute value of a difference between the target torque of the engine outputted by the torque distribution module of the vehicle in the parallel driving mode and the actual torque of the engine is less than or equal to a second preset torque value, an absolute value of a difference between the target torque of the electric generator outputted by the torque distribution module of the vehicle in the parallel driving mode and the actual torque of the electric generator is less than or equal to a third preset torque value, and an absolute value of a difference between the target torque of the driving motor outputted by the torque distribution module of the vehicle in the parallel driving mode and the actual torque of the driving motor is less than or equal to a fourth preset torque value, it is determined that the switching of the vehicle from the series driving mode to the parallel driving mode is completed, and then control is performed according to respective target torques distributed to the engine, the electric generator and the driving motor in the parallel driving mode.

(S4) A parallel-to-series switching process, including the specific implementation steps as follows:
(S401) A torque exchange stage. Specifically, the current target torque of the engine is gradually adjusted to the target torque of the engine during the series-parallel switching, at the same time a target torque of the electric generator is gradually increased from the target torque of the electric generator during the series-parallel switching to a negative value of the target torque of the engine during the series-parallel switching multiplied by the engine-to-electric generator speed ratio, and at the same time the target torque of the driving motor is adjusted to follow the change so as to meet a driver required torque, and the actual rotation speed of the electric generator is set as the target rotation speed of the electric generator during the series-parallel switching. where, a calculation formula of the target torque P1TqReq of the electric generator during the series-parallel switching is as follows: $P 1 TqReq = - EngTqReq * EngP 1 Ratio$ . EngTqReq is the target torque of the engine during the series-parallel switching calculated by the method described in the step S2, and EngP1Ratio is the engine-to-electric generator speed ratio.

The target torque of the driving motor during the series-parallel switching is obtained according to the following calculation method. At this time, the target torque P3TqReq of the driving motor during the series-parallel switching is calculated by the following formula: 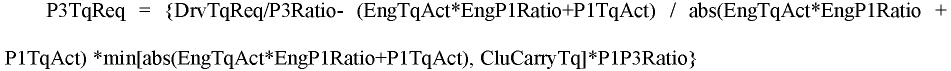 P3TqReq = {DrvTqReq/P3Ratio- (EngTqAct*EngP1Ratio+P1TqAct) / abs(EngTqAct*EngP1Ratio + P1TqAct) *min[abs(EngTqAct*EngP1Ratio+P1TqAct), CluCarryTq]*P1P3Ratio} where, DrvTqReq is the driver required torque, which is obtained by performing a lookup operation in a table according to the vehicle speed and the accelerator pedal opening degree; P3Ratio is the driving motor-to-wheel end speed ratio; EngTqAct is the actual torque of the engine; EngP1Ratio is the engine-to-electric generator speed ratio; P1TqAct is the actual torque of the electric generator; P1P3Ratio is the electric generator-to-driving motor speed ratio; CluCarryTq is a transmissible torque of the clutch; wherein the transmissible torque CluCarryTq of the clutch is obtained by performing a lookup operation in a table based on a clutch oil pressure characteristic curve characterizing an association relationship between an actual oil pressure of the clutch and the transmissible torque CluCarryTq of the clutch.

If the following formula is satisfied, the process proceeds to step (S402): $\left|EngTqAct+P1TqAct\right| ⩽ TBD 8$
EngTqAct is the actual torque of the engine; P1TqAct is the actual torque of the electric generator;
where, TBD8 is a calibration value (a sixth preset torque value), such as 5 Nm.

(S402) A clutch disconnection stage. Specifically, a solenoid valve of the clutch is closed, and after the hydraulic module releases an oil pressure, the clutch disconnection is completed;
the target torque of the engine, the target torque of the electric generator, the target torque of the driving motor and the target rotation speed of the electric generator are obtained according to the calculation method described in the step S401. If the following formula is satisfied, the process proceeds to step (S403): $CluPrsAct ⩽ TBD 9$
where, CluPrsAct is the actual oil pressure of the clutch, and TBD9 is a calibration value (a second preset oil pressure), such as 2 bars.

(S403) A rotation speed and torque recovery stage. The electric generator control mode is adjusted from torque control to rotation speed control, and the target torque of the engine, the target torque of the electric generator, the target torque of the driving motor and the target rotation speed of the electric generator that are calculated according to the method described in the step S401 are adjusted to values of the corresponding target torques and the target rotation speed of the electric generator that are outputted by the torque distribution module in the series driving mode; and in an adjustment process, the smoothness of the target torques or rotation speed should be ensured, and the implementation is not specifically required, such as a slope restriction.

If the following formula (d), formula (e) and formula (f) are satisfied at the same time, the series-to-parallel switching flow ends. $\left|EngTqReqsHEV-EngTqAct\right| ⩽ TBD 10$ (d) $\left|P1SpdReqSHEV-P1SpdAct\right| \leq TBD 11$ (e) $\left|P3TqReqsHEV-P3TqAct\right| \leq TBD 12$ (f)

EngTqReqsHEV, P1SpdReqSHEV and P3TqReqsHEV are respectively the target torque of the engine, a target rotation speed of the P1 electric generator and a target torque of the P3 driving motor that are outputted by the torque distribution function in the series driving mode; EngTqAct, P1SpdAct and P3TqAct are respectively the actual torque of the engine, the actual rotation speed of the P1 electric generator and an actual torque of the P3 driving motor; TBD 10 is a calibration value (corresponding to a seventh preset torque value), such as 5 Nm; TBD11 is a calibration value (corresponding to an eighth preset rotation speed value), such as 25 rpm; and TBD12 is a calibration value (corresponding to a ninth preset torque value), such as 5 Nm.

That is to say, if an absolute value of a difference between the target torque of the engine outputted by the torque distribution module of the vehicle in the series driving mode and the actual torque of the engine is less than or equal to an eighth preset torque value, an absolute value of a difference between the target rotation speed of the electric generator outputted by the torque distribution module of the vehicle in the series driving mode and the actual rotation speed of the electric generator is less than or equal to an eighth preset rotation speed value, and an absolute value of a difference between the target torque of the driving motor outputted by the torque distribution module of the vehicle in the series driving mode and the actual torque of the driving motor is less than or equal to a ninth preset torque value, it is determined that the switching of the vehicle from the parallel driving mode to the series driving mode is completed, and then control is performed according to respective target torques and target rotation speeds distributed to the engine, the electric generator and the driving motor in the series driving mode.

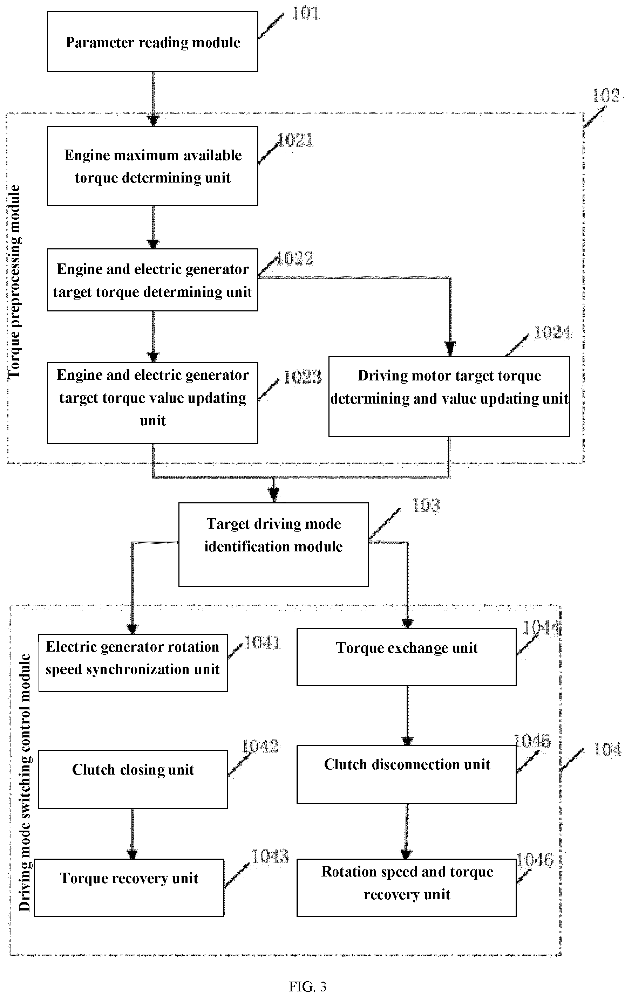

As shown in FIG. 3, the present application provides an apparatus for controlling switching between series and parallel driving modes of a hybrid vehicle, wherein a hybrid system of the hybrid vehicle at least comprises a power battery, an engine, a driving motor, an electric generator and a clutch, wherein the engine can be connected to or disconnected from a wheel end by means of the clutch, the driving motor is directly connected to the wheel end, the driving motor is connected to the power battery, the electric generator is connected to the engine, the electric generator is connectable to the power battery and/or the driving motor. The apparatus comprises:
a parameter reading module 101 configured to read relevant parameters of the vehicle and a current driving mode of the vehicle when receiving a series-parallel switching request;
a torque preprocessing module 102 configured to perform target torque preprocessing on the engine, the electric generator and the driving motor based on the current driving mode of the vehicle and the relevant parameters of the vehicle;
a target driving mode identification module 103 configured to identify a target driving mode of the vehicle based on the received series-parallel switching request; and
a driving mode switching control module 104 configured to perform, after the torque preprocessing is completed, switching control between series and parallel driving modes of the vehicle according to the relevant parameters, the current driving mode and the target driving mode of the vehicle.

Optionally, the relevant parameters of the vehicle comprise: a vehicle speed, an accelerator pedal opening degree, an actual torque of the engine, an actual torque of the electric generator, a current target torque of the engine, a current target torque of the electric generator, a current target torque of the driving motor, a maximum electricity-generating torque of the electric generator, a maximum torque of the engine, an engine-to-electric generator speed ratio, an electric generator-to-driving motor speed ratio, a driving motor-to-wheel end speed ratio and an oil pressure of the clutch; and the torque preprocessing module 102 comprises:
an engine maximum available torque determining unit 1021 configured to determine a maximum available torque of the engine during series-parallel switching based on the maximum electricity-generating torque of the electric generator and the maximum torque of the engine;
an engine and electric generator target torque determining unit 1022 configured to determine a target torque of the engine and a target torque of the electric generator during the series-parallel switching based on the current driving mode of the vehicle, the maximum available torque of the engine during the series-parallel switching and the current target torque of the engine;
an engine and electric generator target torque value updating unit 1023 configured to update a value of the current target torque of the engine and a value of the current target torque of the electric generator based on the current driving mode of the vehicle, and the target torque of the engine and the target torque of the electric generator during the series-parallel switching; and
a driving motor target torque determining and value updating unit 1024 configured to determine a target torque of the driving motor during the series-parallel switching based on a driver required torque, the driving motor-to-wheel end speed ratio, the engine-to-electric generator speed ratio, the electric generator-to-driving motor speed ratio, the actual torque of the engine, the actual torque of the electric generator and the oil pressure of the clutch, and updating a value of the current target torque of the driving motor;
wherein, the driver required torque is obtained by performing a lookup operation in a table according to the vehicle speed and the accelerator pedal opening degree.

Optionally, the target driving mode comprises a parallel driving mode; the relevant parameters of the vehicle comprise: an actual rotation speed of the electric generator, an actual torque of the electric generator, an actual oil pressure of the clutch, a current target rotation speed of the electric generator, as well as a target torque of the engine, a target torque of the electric generator, a target torque of the driving motor and a target rotation speed of the electric generator that are outputted by a torque distribution module of the vehicle in the parallel driving mode; and if the target driving mode is the parallel driving mode, the driving mode switching control module 104 comprises:
an electric generator rotation speed synchronization unit 1041 configured to proceed to an electric generator rotation speed synchronization stage, wherein the actual torque of the electric generator is set to be the target torque of the electric generator and the current target rotation speed of the electric generator is gradually adjusted to a target synchronous rotation speed of the electric generator;
a clutch closing unit 1042 configured to: when an absolute value of a difference between the target synchronous rotation speed of the electric generator and the actual rotation speed of the electric generator becomes less than a first preset rotation speed value in the electric generator rotation speed synchronization stage, proceed to a clutch closing stage for clutch closing control; and
a torque recovery unit 1043 configured to: when the actual oil pressure of the clutch becomes greater than or equal to a first preset oil pressure after the clutch closing control is completed, proceed to a torque recovery stage, wherein an electric generator control mode is converted from rotation speed control to torque control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the parallel driving mode.

Optionally, the target driving mode comprises a series driving mode; the relevant parameters of the vehicle comprise: an actual torque of the engine, an actual torque of the electric generator, an actual rotation speed of the electric generator, an actual oil pressure of the clutch, an engine-to-electric generator speed ratio, as well as a target torque of the engine, a target torque of the electric generator, a target torque of the driving motor and a target rotation speed of the electric generator that are outputted by a torque distribution module of the vehicle in the series driving mode; and if the target driving mode is the series driving mode, the driving mode switching control module 104 comprises:
a torque exchange unit 1044 configured to proceed to a torque exchange stage wherein the target torque of the electric generator from 0 to a negative value of the target torque of the engine during the series-parallel switching multiplied by the engine-to-electric generator speed ratio, and at the same time the target torque of the driving motor is adjusted to follow the change so as to meet a driver required torque, and the actual rotation speed of the electric generator is set to be the target rotation speed of the electric generator during the series-parallel switching;
a clutch disconnection unit 1045 configured to: when an absolute value of a sum of the actual torque of the engine and the actual torque of the electric generator becomes less than or equal to a sixth preset torque value in the torque exchange stage, proceed to a clutch disconnection stage for clutch disconnection control; and
a rotation speed and torque recovery unit 1046 configured to: when the actual oil pressure of the clutch becomes less than or equal to a second preset oil pressure after the clutch disconnection control is completed, proceed to a rotation speed and torque recovery stage, wherein an electric generator control mode is converted from torque control to rotation speed control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the series driving mode.

The present application also provides a vehicle comprising the apparatus for controlling switching between series and parallel driving modes of a hybrid vehicle mentioned above.

The present application also provides a control device, comprising a processor, a memory, and a program or instructions stored in the memory and executable by the processor, wherein the program or instructions, when executed by the processor, cause the steps of the method for controlling switching between series and parallel driving modes of a hybrid vehicle to be implemented.

The present application also provides a readable storage medium having a program or instructions stored therein, wherein the program or instructions, when executed by a processor, cause the steps of the method for controlling switching between series and parallel driving modes of a hybrid vehicle to be implemented.

## Claims

1. A method for controlling switching between series and parallel driving modes of a hybrid vehicle, wherein a hybrid system of the hybrid vehicle at least comprises a power battery, an engine, a driving motor, an electric generator and a clutch, wherein the engine can be connected to or disconnected from a wheel end by means of the clutch, the driving motor is directly connected to the wheel end, the driving motor is connected to the power battery, the electric generator is connected to the engine, the electric generator is connectable to the power battery and/or the driving motor, and the method comprises:
reading relevant parameters of the vehicle and a current driving mode of the vehicle when receiving a series-parallel switching request;
performing target torque preprocessing on the engine, the electric generator and the driving motor based on the current driving mode of the vehicle and the relevant parameters of the vehicle;
identifying a target driving mode of the vehicle based on the received series-parallel switching request; and
performing, after the torque preprocessing is completed, switching control between series and parallel driving modes of the vehicle according to the relevant parameters, the current driving mode and the target driving mode of the vehicle;
**characterized in that**
the relevant parameters of the vehicle comprise: a vehicle speed, an accelerator pedal opening degree, an actual torque of the engine, an actual torque of the electric generator, a current target torque of the engine, a current target torque of the electric generator, a current target torque of the driving motor, a maximum electricity-generating torque of the electric generator, a maximum torque of the engine, an engine-to-electric generator speed ratio, an electric generator-to-driving motor speed ratio, a driving motor-to-wheel end speed ratio and an oil pressure of the clutch;
the step of performing target torque preprocessing on the engine, the electric generator and the driving motor based on the current driving mode of the vehicle and the relevant parameters of the vehicle comprises:
determining a maximum available torque of the engine during series-parallel switching based on the maximum electricity-generating torque of the electric generator and the maximum torque of the engine;
determining a target torque of the engine and a target torque of the electric generator during the series-parallel switching based on the current driving mode of the vehicle, the maximum available torque of the engine during the series-parallel switching and the current target torque of the engine;
updating a value of the current target torque of the engine and a value of the current target torque of the electric generator based on the current driving mode of the vehicle, and the target torque of the engine and the target torque of the electric generator during the series-parallel switching; and
determining a target torque of the driving motor during the series-parallel switching based on a driver required torque, the driving motor-to-wheel end speed ratio, the engine-to-electric generator speed ratio, the electric generator-to-driving motor speed ratio, the actual torque of the engine, the actual torque of the electric generator and the oil pressure of the clutch, and updating a value of the current target torque of the driving motor;
wherein, the driver required torque is obtained by performing a lookup operation in a table according to the vehicle speed and the accelerator pedal opening degree.

2. The method for controlling switching between series and parallel driving modes of a hybrid vehicle according to claim 1, **characterized in that**
firstly, a smaller value selected from an absolute value of the maximum electricity-generating torque of the electric generator and the maximum torque of the engine is determined, and then a sum of the selected smaller value and a first preset torque value is determined to be the maximum available torque of the engine during the series-parallel switching;
a smaller value selected from the maximum available torque of the engine during the series-parallel switching and the current target torque of the engine is determined to be the target torque of the engine during the series-parallel switching;
if the current driving mode of the vehicle is a parallel driving mode, the target torque of the electric generator during the series-parallel switching is determined to be 0; and
if the current driving mode of the vehicle is a series driving mode, the target torque of the electric generator during the series-parallel switching is determined to be the actual torque of the electric generator.

3. The method for controlling switching between series and parallel driving modes of a hybrid vehicle according to claim 1 or 2, **characterized in that** the target driving mode comprises a parallel driving mode; the relevant parameters of the vehicle comprise: an actual torque of the engine, an actual rotation speed of the electric generator, an actual torque of the electric generator, an actual oil pressure of the clutch, a current target rotation speed of the electric generator, as well as a target torque of the engine, a target torque of the electric generator, a target torque of the driving motor and a target rotation speed of the electric generator that are outputted by a torque distribution module of the vehicle in the parallel driving mode; and if the target driving mode is the parallel driving mode, the step of performing switching control between series and parallel driving modes of the vehicle according to the relevant parameters, the current driving mode and the target driving mode of the vehicle comprises:
proceeding to an electric generator rotation speed synchronization stage, wherein the actual torque of the electric generator is set to be the target torque of the electric generator and the current target rotation speed of the electric generator is gradually adjusted to a target synchronous rotation speed of the electric generator;
when an absolute value of a difference between the target synchronous rotation speed of the electric generator and the actual rotation speed of the electric generator becomes less than a first preset rotation speed value in the electric generator rotation speed synchronization stage, proceeding to a clutch closing stage for clutch closing control; and
when the actual oil pressure of the clutch becomes greater than or equal to a first preset oil pressure after the clutch closing control is completed, proceeding to a torque recovery stage, wherein an electric generator control mode is converted from rotation speed control to torque control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the parallel driving mode.

4. The method for controlling switching between series and parallel driving modes of a hybrid vehicle according to claim 3, **characterized in that** the relevant parameters of the vehicle comprise: a vehicle speed, an electric generator-to-wheel end speed ratio and a tire diameter, wherein the target synchronous rotation speed of the electric generator is calculated by the following formula: ${P 1 Spd}_{Syn} = \frac{VehSpd ∗ 1000 ∗ P 1 Ratio}{60 πD}$ where, VehSpd is the vehicle speed, P1Ratio is the electric generator-to-wheel end speed ratio, and D is the tire diameter.

5. The method for controlling switching between series and parallel driving modes of a hybrid vehicle according to claim 1 or 2, **characterized in that** the target driving mode comprises a series driving mode; the relevant parameters of the vehicle comprise: an actual torque of the engine, an actual torque of the electric generator, an actual rotation speed of the electric generator, an actual oil pressure of the clutch, an engine-to-electric generator speed ratio, as well as a target torque of the engine, a target torque of the electric generator, a target torque of the driving motor and a target rotation speed of the electric generator that are outputted by a torque distribution module of the vehicle in the series driving mode; and if the target driving mode is the series driving mode, the step of performing switching control between series and parallel driving modes of the vehicle according to the relevant parameters, the current driving mode and the target driving mode of the vehicle comprises:
proceeding to a torque exchange stage wherein a target torque of the electric generator is gradually increased from the target torque of the electric generator during the series-parallel switching to a negative value of the target torque of the engine during the series-parallel switching multiplied by the engine-to-electric generator speed ratio, and at the same time the target torque of the driving motor is adjusted to follow the change so as to meet a driver required torque, and the actual rotation speed of the electric generator is set to be the target rotation speed of the electric generator during the series-parallel switching;
when an absolute value of a sum of the actual torque of the engine and the actual torque of the electric generator becomes less than or equal to a sixth preset torque value in the torque exchange stage, proceeding to a clutch disconnection stage for clutch disconnection control; and
when the actual oil pressure of the clutch becomes less than or equal to a second preset oil pressure after the clutch disconnection control is completed, proceeding to a rotation speed and torque recovery stage, wherein an electric generator control mode is converted from torque control to rotation speed control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the series driving mode.

6. The method for controlling switching between series and parallel driving modes of a hybrid vehicle according to claim 3, **characterized in that**, after adjusting the values of the target torque of the engine, the target torque of the electric generator, the target torque of the driving motor and the target rotation speed of the electric generator, the method further comprises:
if an absolute value of a difference between the target torque of the engine outputted by the torque distribution module of the vehicle in the parallel driving mode and the actual torque of the engine is less than or equal to a second preset torque value, an absolute value of a difference between the target torque of the electric generator outputted by the torque distribution module of the vehicle in the parallel driving mode and the actual torque of the electric generator is less than or equal to a third preset torque value, and an absolute value of a difference between the target torque of the driving motor outputted by the torque distribution module of the vehicle in the parallel driving mode and the actual torque of the driving motor is less than or equal to a fourth preset torque value, determining that the switching of the vehicle from the series driving mode to the parallel driving mode is completed.

7. The method for controlling switching between series and parallel driving modes of a hybrid vehicle according to claim 1, **characterized in that** the target torque P3TqReq of the driving motor during the series-parallel switching is calculated by the following formula: 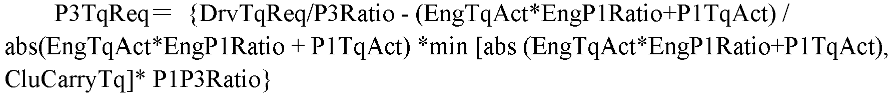 P3TqReq= {DrvTqReq/P3Ratio - (EngTqAct*EngP1Ratio+P1TqAct) / abs(EngTqAct*EngP1Ratio + P1TqAct) *min [abs (EngTqAct*EngP1Ratio+P1TqAct), CluCarryTq]* P1P3Ratio} where, DrvTqReq is the driver required torque, which is obtained by performing a lookup operation in a table according to the vehicle speed and the accelerator pedal opening degree; P3Ratio is the driving motor-to-wheel end speed ratio; EngTqAct is the actual torque of the engine; EngP1Ratio is the engine-to-electric generator speed ratio; P1TqAct is the actual torque of the electric generator; P1P3Ratio is the electric generator-to-driving motor speed ratio; CluCarryTq is a transmissible torque of the clutch; wherein the transmissible torque CluCarryTq of the clutch is obtained by performing a lookup operation in a table based on a clutch oil pressure characteristic curve characterizing an association relationship between an actual oil pressure of the clutch and the transmissible torque CluCarryTq of the clutch.

8. The method for controlling switching between series and parallel driving modes of a hybrid vehicle according to claim 5, **characterized in that**, after adjusting the target torque of the engine, the target torque of the electric generator, the target torque of the driving motor and the target rotation speed of the electric generator, the method further comprises:
if an absolute value of a difference between the target torque of the engine outputted by the torque distribution module of the vehicle in the series driving mode and the actual torque of the engine is less than or equal to an eighth preset torque value, an absolute value of a difference between the target rotation speed of the electric generator outputted by the torque distribution module of the vehicle in the series driving mode and the actual rotation speed of the electric generator is less than or equal to an eighth preset rotation speed value, and an absolute value of a difference between the target torque of the driving motor outputted by the torque distribution module of the vehicle in the series driving mode and the actual torque of the driving motor is less than or equal to a ninth preset torque value, determining that the switching of the vehicle from the parallel driving mode to the series driving mode is completed.

9. An apparatus for controlling switching between series and parallel driving modes of a hybrid vehicle, wherein a hybrid system of the hybrid vehicle at least comprises a power battery, an engine, a driving motor, an electric generator and a clutch, wherein the engine can be connected to or disconnected from a wheel end by means of the clutch, the driving motor is directly connected to the wheel end, the driving motor is connected to the power battery, the electric generator is connected to the engine, the electric generator is connectable to the power battery and/or the driving motor, and the apparatus comprises:
a parameter reading module (101) configured to read relevant parameters of the vehicle and a current driving mode of the vehicle when receiving a series-parallel switching request;
a torque preprocessing module (102) configured to perform target torque preprocessing on the engine, the electric generator and the driving motor based on the current driving mode of the vehicle and the relevant parameters of the vehicle;
a target driving mode identification module (103) configured to identify a target driving mode of the vehicle based on the received series-parallel switching request; and
a driving mode switching control module (104) configured to perform, after the torque preprocessing is completed, switching control between series and parallel driving modes of the vehicle according to the relevant parameters, the current driving mode and the target driving mode of the vehicle;
**characterized in that**
the relevant parameters of the vehicle comprise: a vehicle speed, an accelerator pedal opening degree, an actual torque of the engine, an actual torque of the electric generator, a current target torque of the engine, a current target torque of the electric generator, a current target torque of the driving motor, a maximum electricity-generating torque of the electric generator, a maximum torque of the engine, an engine-to-electric generator speed ratio, an electric generator-to-driving motor speed ratio, a driving motor-to-wheel end speed ratio and an oil pressure of the clutch;
the torque preprocessing module comprises:
an engine maximum available torque determining unit (1021) configured to determine a maximum available torque of the engine during series-parallel switching based on the maximum electricity-generating torque of the electric generator and the maximum torque of the engine;
an engine and electric generator target torque determining unit (1022) configured to determine a target torque of the engine and a target torque of the electric generator during the series-parallel switching based on the current driving mode of the vehicle, the maximum available torque of the engine during the series-parallel switching and the current target torque of the engine;
an engine and electric generator target torque value updating unit (1023) configured to update a value of the current target torque of the engine and a value of the current target torque of the electric generator based on the current driving mode of the vehicle, and the target torque of the engine and the target torque of the electric generator during the series-parallel switching; and
a driving motor target torque determining and value updating unit (1024) configured to determine a target torque of the driving motor during the series-parallel switching based on a driver required torque, the driving motor-to-wheel end speed ratio, the engine-to-electric generator speed ratio, the electric generator-to-driving motor speed ratio, the actual torque of the engine, the actual torque of the electric generator and the oil pressure of the clutch, and updating a value of the current target torque of the driving motor;
wherein, the driver required torque is obtained by performing a lookup operation in a table according to the vehicle speed and the accelerator pedal opening degree.

10. The apparatus for controlling switching between series and parallel driving modes of a hybrid vehicle according to claim 9, **characterized in that** the target driving mode comprises a parallel driving mode; the relevant parameters of the vehicle comprise:
an actual torque of the engine, an actual rotation speed of the electric generator, an actual torque of the electric generator, an actual oil pressure of the clutch, a current target rotation speed of the electric generator, as well as a target torque of the engine, a target torque of the electric generator, a target torque of the driving motor and a target rotation speed of the electric generator that are outputted by a torque distribution module of the vehicle in the parallel driving mode; and if the target driving mode is the parallel driving mode, the driving mode switching control module comprises:
an electric generator rotation speed synchronization unit (1041) configured to proceed to an electric generator rotation speed synchronization stage, wherein the actual torque of the electric generator is set to be the target torque of the electric generator and the current target rotation speed of the electric generator is gradually adjusted to a target synchronous rotation speed of the electric generator;
a clutch closing unit (1042) configured to: when an absolute value of a difference between the target synchronous rotation speed of the electric generator and the actual rotation speed of the electric generator becomes less than a first preset rotation speed value in the electric generator rotation speed synchronization stage, proceed to a clutch closing stage for clutch closing control; and
a torque recovery unit (1043) configured to: when the actual oil pressure of the clutch becomes greater than or equal to a first preset oil pressure after the clutch closing control is completed, proceed to a torque recovery stage, wherein an electric generator control mode is converted from rotation speed control to torque control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the parallel driving mode.

11. The apparatus for controlling switching between series and parallel driving modes of a hybrid vehicle according to claim 9, **characterized in that** the target driving mode comprises a series driving mode; the relevant parameters of the vehicle comprise: an actual torque of the engine, an actual torque of the electric generator, an actual rotation speed of the electric generator, an actual oil pressure of the clutch, an engine-to-electric generator speed ratio, as well as a target torque of the engine, a target torque of the electric generator, a target torque of the driving motor and a target rotation speed of the electric generator that are outputted by a torque distribution module of the vehicle in the series driving mode; and if the target driving mode is the series driving mode, the driving mode switching control module comprises:
a torque exchange unit (1044) configured to proceed to a torque exchange stage wherein a target torque of the electric generator is gradually increased from the target torque of the electric generator during the series-parallel switching to a negative value of the target torque of the engine during the series-parallel switching multiplied by the engine-to-electric generator speed ratio and at the same time the target torque of the driving motor is adjusted to follow the change so as to meet a driver required torque, and the actual rotation speed of the electric generator is set to be the target rotation speed of the electric generator during the series-parallel switching;
a clutch disconnection unit (1045) configured to: when an absolute value of a sum of the actual torque of the engine and the actual torque of the electric generator becomes less than or equal to a sixth preset torque value in the torque exchange stage, proceed to a clutch disconnection stage for clutch disconnection control; and
a rotation speed and torque recovery unit (1046) configured to: when the actual oil pressure of the clutch becomes less than or equal to a second preset oil pressure after the clutch disconnection control is completed, proceed to a rotation speed and torque recovery stage, wherein an electric generator control mode is converted from torque control to rotation speed control, and values of the target torque of the engine, the target torque of the electric generator, the target torque of the driving motor and the target rotation speed of the electric generator during the series-parallel switching are respectively adjusted to the target torque of the engine, the target torque of the electric generator, the target torque of the driving motor and the target rotation speed of the electric generator that are outputted by the torque distribution module of the vehicle in the series driving mode.

12. A vehicle, **characterized by** comprising the apparatus for controlling switching between series and parallel driving modes of a hybrid vehicle according to any one of claims 9 to 11.

## Patentansprüche

1. Verfahren zur Steuerung des Umschaltens zwischen einem seriellen und einem parallelen Fahrmodus eines Hybridfahrzeugs, wobei ein Hybridsystem des Hybridfahrzeugs zumindest eine Antriebsbatterie, einen Verbrennungsmotor, einen Antriebsmotor, einen Generator und eine Kupplung umfasst, wobei der Verbrennungsmotor mittels der Kupplung mit einer Radseite verbindbar oder von der Radseite trennbar ist, der Antriebsmotor direkt mit der Radseite verbunden ist, der Antriebsmotor mit der Antriebsbatterie verbunden ist, der Generator mit dem Verbrennungsmotor verbunden ist und der Generator mit der Antriebsbatterie und/oder dem Antriebsmotor verbindbar ist, und wobei das Verfahren die folgenden Schritte umfasst:
Einlesen relevanter Parameter des Fahrzeugs und eines aktuellen Fahrmodus des Fahrzeugs bei Empfang einer Anforderung zum Umschalten zwischen dem seriellen und dem parallelen Fahrmodus;
Durchführen einer Vorverarbeitung der Solldrehmomente des Verbrennungsmotors, des Generators und des Antriebsmotors auf Grundlage des aktuellen Fahrmodus des Fahrzeugs und der relevanten Parameter des Fahrzeugs;
Ermitteln eines Zielfahrmodus des Fahrzeugs auf Grundlage der empfangenen Anforderung zum Umschalten zwischen dem seriellen und dem parallelen Fahrmodus; und
Steuern des Umschaltens des Fahrzeugs zwischen dem seriellen und dem parallelen Fahrmodus nach Abschluss der Drehmomentvorverarbeitung anhand der relevanten Parameter, des aktuellen Fahrmodus und des Zielfahrmodus des Fahrzeugs;
**dadurch gekennzeichnet, dass**
die relevanten Parameter des Fahrzeugs eine Fahrzeuggeschwindigkeit, einen Öffnungsgrad des Fahrpedals, ein Ist-Drehmoment des Verbrennungsmotors, ein Ist-Drehmoment des Generators, ein aktuelles Solldrehmoment des Verbrennungsmotors, ein aktuelles Solldrehmoment des Generators, ein aktuelles Solldrehmoment des Antriebsmotors, ein maximales generatorisches Drehmoment des Generators, ein maximales Drehmoment des Verbrennungsmotors, ein Drehzahlverhältnis des Verbrennungsmotors zum Generator, ein Drehzahlverhältnis des Generators zum Antriebsmotor, ein Drehzahlverhältnis des Antriebsmotors zur Radseite und einen Öldruck der Kupplung umfassen;
und der Schritt des Durchführens der Vorverarbeitung der Solldrehmomente des Verbrennungsmotors, des Generators und des Antriebsmotors auf Grundlage des aktuellen Fahrmodus des Fahrzeugs und der relevanten Parameter des Fahrzeugs die folgenden Teilschritte umfasst:
Bestimmen eines maximal verfügbaren Drehmoments des Verbrennungsmotors während des Umschaltens zwischen dem seriellen und dem parallelen Fahrmodus auf Grundlage des maximalen generatorischen Drehmoments des Generators und des maximalen Drehmoments des Verbrennungsmotors;
Bestimmen eines Solldrehmoments des Verbrennungsmotors und eines Solldrehmoments des Generators während des Umschaltens zwischen dem seriellen und dem parallelen Fahrmodus auf Grundlage des aktuellen Fahrmodus des Fahrzeugs, des maximal verfügbaren Drehmoments des Verbrennungsmotors während des Umschaltens zwischen dem seriellen und dem parallelen Fahrmodus und des aktuellen Solldrehmoments des Verbrennungsmotors;
Aktualisieren des Werts des aktuellen Solldrehmoments des Verbrennungsmotors und des Werts des aktuellen Solldrehmoments des Generators auf Grundlage des aktuellen Fahrmodus des Fahrzeugs sowie des Solldrehmoments des Verbrennungsmotors und des Solldrehmoments des Generators während des Umschaltens zwischen dem seriellen und dem parallelen Fahrmodus; und
Bestimmen eines Solldrehmoments des Antriebsmotors während des Umschaltens zwischen dem seriellen und dem parallelen Fahrmodus auf Grundlage eines vom Fahrer angeforderten Drehmoments, des Drehzahlverhältnisses des Antriebsmotors zur Radseite, des Drehzahlverhältnisses des Verbrennungsmotors zum Generator, des Drehzahlverhältnisses des Generators zum Antriebsmotor, des Ist-Drehmoments des Verbrennungsmotors, des Ist-Drehmoments des Generators und des Öldrucks der Kupplung sowie Aktualisieren des Werts des aktuellen Solldrehmoments des Antriebsmotors;
wobei das vom Fahrer angeforderte Drehmoment durch eine Tabellenabfrage anhand der Fahrzeuggeschwindigkeit und des Öffnungsgrads des Fahrpedals ermittelt wird.

2. Verfahren zur Steuerung des Umschaltens zwischen einem seriellen und einem parallelen Fahrmodus eines Hybridfahrzeugs nach Anspruch 1, **dadurch gekennzeichnet, dass**
zunächst der kleinere Wert aus dem Absolutwert des maximalen generatorischen Drehmoments des Generators und dem maximalen Drehmoment des Verbrennungsmotors bestimmt wird und anschließend die Summe aus dem bestimmten kleineren Wert und einem ersten vorgegebenen Drehmomentwert als das maximal verfügbare Drehmoment des Verbrennungsmotors während des Umschaltens zwischen dem seriellen und dem parallelen Fahrmodus bestimmt wird;
der kleinere Wert aus dem maximal verfügbaren Drehmoment des Verbrennungsmotors während des Umschaltens zwischen dem seriellen und dem parallelen Fahrmodus und dem aktuellen Solldrehmoment des Verbrennungsmotors als das Solldrehmoment des Verbrennungsmotors während des Umschaltens zwischen dem seriellen und dem parallelen Fahrmodus bestimmt wird;
wenn der aktuelle Fahrmodus des Fahrzeugs ein paralleler Fahrmodus ist, das Solldrehmoment des Generators während des Umschaltens zwischen dem seriellen und dem parallelen Fahrmodus auf 0 festgelegt wird; und
wenn der aktuelle Fahrmodus des Fahrzeugs ein serieller Fahrmodus ist, das Solldrehmoment des Generators während des Umschaltens zwischen dem seriellen und dem parallelen Fahrmodus auf das Ist-Drehmoment des Generators festgelegt wird.

3. Verfahren zur Steuerung des Umschaltens zwischen einem seriellen und einem parallelen Fahrmodus eines Hybridfahrzeugs nach Anspruch 1 oder 2, **dadurch gekennzeichnet, dass** der Zielfahrmodus einen parallelen Fahrmodus umfasst; wobei die relevanten Parameter des Fahrzeugs ein Ist-Drehmoment des Verbrennungsmotors, eine Ist-Drehzahl des Generators, ein Ist-Drehmoment des Generators, einen Ist-Öldruck der Kupplung, eine aktuelle Solldrehzahl des Generators sowie ein Solldrehmoment des Verbrennungsmotors, ein Solldrehmoment des Generators, ein Solldrehmoment des Antriebsmotors und eine Solldrehzahl des Generators umfassen, die von einem Drehmomentverteilungsmodul des Fahrzeugs im parallelen Fahrmodus ausgegeben werden; und wobei, wenn der Zielfahrmodus der parallele Fahrmodus ist, der Schritt des Steuerns des Umschaltens des Fahrzeugs zwischen dem seriellen und dem parallelen Fahrmodus anhand der relevanten Parameter, des aktuellen Fahrmodus und des Zielfahrmodus des Fahrzeugs die folgenden Teilschritte umfasst:
Übergehen in eine Drehzahlsynchronisierungsphase des Generators, wobei das Ist-Drehmoment des Generators auf das Solldrehmoment des Generators eingestellt wird und die aktuelle Solldrehzahl des Generators schrittweise auf eine Soll-Synchrondrehzahl des Generators eingestellt wird;
wenn während der Drehzahlsynchronisierungsphase des Generators der Absolutwert einer Differenz zwischen der Soll-Synchrondrehzahl des Generators und der Ist-Drehzahl des Generators kleiner als ein erster vorgegebener Drehzahlwert wird,
Übergehen in eine Kupplungsschließphase zum Steuern des Schließens der Kupplung; und
wenn nach Abschluss der Steuerung des Schließens der Kupplung der Ist-Öldruck der Kupplung größer als oder gleich einem ersten vorgegebenen Öldruck wird, Übergehen in eine Drehmomentwiederherstellungsphase, wobei ein Steuerungsmodus des Generators von einer Drehzahlregelung auf eine Drehmomentregelung umgestellt wird und die Werte des Solldrehmoments des Verbrennungsmotors, des Solldrehmoments des Generators, des Solldrehmoments des Antriebsmotors und der Solldrehzahl des Generators während des Umschaltens zwischen dem seriellen und dem parallelen Fahrmodus jeweils auf das Solldrehmoment des Verbrennungsmotors, das Solldrehmoment des Generators, das Solldrehmoment des Antriebsmotors und die Solldrehzahl des Generators eingestellt werden, die von dem Drehmomentverteilungsmodul des Fahrzeugs im parallelen Fahrmodus ausgegeben werden.

4. Verfahren zur Steuerung des Umschaltens zwischen einem seriellen und einem parallelen Fahrmodus eines Hybridfahrzeugs nach Anspruch 3, **dadurch gekennzeichnet, dass** die relevanten Parameter des Fahrzeugs eine Fahrzeuggeschwindigkeit, ein Drehzahlverhältnis des Generators zur Radseite und einen Reifendurchmesser umfassen, wobei die Soll-Synchrondrehzahl des Generators anhand der folgenden Formel berechnet wird: $P 1 {Spd}_{Syn} = \frac{VehSpd ∗ 1000 ∗ P 1 Ratio}{60 πD}$ wobei VehSpd die Fahrzeuggeschwindigkeit, P1Ratio das Drehzahlverhältnis des Generators zur Radseite und D der Reifendurchmesser ist.

5. Verfahren zur Steuerung des Umschaltens zwischen einem seriellen und einem parallelen Fahrmodus eines Hybridfahrzeugs nach Anspruch 1 oder 2, **dadurch gekennzeichnet, dass** der Zielfahrmodus einen seriellen Fahrmodus umfasst; wobei die relevanten Parameter des Fahrzeugs ein Ist-Drehmoment des Verbrennungsmotors, ein Ist-Drehmoment des Generators, eine Ist-Drehzahl des Generators, einen Ist-Öldruck der Kupplung, ein Drehzahlverhältnis des Verbrennungsmotors zum Generator sowie ein Solldrehmoment des Verbrennungsmotors, ein Solldrehmoment des Generators, ein Solldrehmoment des Antriebsmotors und eine Solldrehzahl des Generators umfassen, die von einem Drehmomentverteilungsmodul des Fahrzeugs im seriellen Fahrmodus ausgegeben werden; und, wenn der Zielfahrmodus der serielle Fahrmodus ist, der Schritt des Steuerns des Umschaltens des Fahrzeugs zwischen dem seriellen und dem parallelen Fahrmodus anhand der relevanten Parameter, des aktuellen Fahrmodus und des Zielfahrmodus des Fahrzeugs die folgenden Teilschritte umfasst:
Übergehen in eine Drehmomentaustauschphase, wobei das Solldrehmoment des Generators schrittweise von dem Solldrehmoment des Generators während des Umschaltens zwischen dem seriellen und dem parallelen Fahrmodus auf das Produkt aus dem negativen Wert des Solldrehmoments des Verbrennungsmotors während des Umschaltens zwischen dem seriellen und dem parallelen Fahrmodus und dem Drehzahlverhältnis des Verbrennungsmotors zum Generator erhöht wird, gleichzeitig das Solldrehmoment des Antriebsmotors der Änderung folgend so eingestellt wird, dass das vom Fahrer angeforderte Drehmoment erfüllt wird, und die Ist-Drehzahl des Generators auf die Solldrehzahl des Generators während des Umschaltens zwischen dem seriellen und dem parallelen Fahrmodus eingestellt wird;
wenn während der Drehmomentaustauschphase der Absolutwert der Summe aus dem Ist-Drehmoment des Verbrennungsmotors und dem Ist-Drehmoment des Generators kleiner als oder gleich einem sechsten vorgegebenen Drehmomentwert wird, Übergehen in eine Kupplungstrennphase zum Steuern des Trennens der Kupplung; und
wenn nach Abschluss der Steuerung des Trennens der Kupplung der Ist-Öldruck der Kupplung kleiner als oder gleich einem zweiten vorgegebenen Öldruck wird, Übergehen in eine Drehzahl- und Drehmomentwiederherstellungsphase, wobei ein Steuerungsmodus des Generators von einer Drehmomentregelung auf eine Drehzahlregelung umgestellt wird und die Werte des Solldrehmoments des Verbrennungsmotors, des Solldrehmoments des Generators, des Solldrehmoments des Antriebsmotors und der Solldrehzahl des Generators während des Umschaltens zwischen dem seriellen und dem parallelen Fahrmodus jeweils auf das Solldrehmoment des Verbrennungsmotors, das Solldrehmoment des Generators, das Solldrehmoment des Antriebsmotors beziehungsweise die Solldrehzahl des Generators eingestellt werden, die von dem Drehmomentverteilungsmodul des Fahrzeugs im seriellen Fahrmodus ausgegeben werden.

6. Verfahren zur Steuerung des Umschaltens zwischen einem seriellen und einem parallelen Fahrmodus eines Hybridfahrzeugs nach Anspruch 3, **dadurch gekennzeichnet, dass** das Verfahren nach dem Einstellen der Werte des Solldrehmoments des Verbrennungsmotors, des Solldrehmoments des Generators, des Solldrehmoments des Antriebsmotors und der Solldrehzahl des Generators ferner den folgenden Schritt umfasst:
wenn der Absolutwert der Differenz zwischen dem von dem Drehmomentverteilungsmodul des Fahrzeugs im parallelen Fahrmodus ausgegebenen Solldrehmoment des Verbrennungsmotors und dem Ist-Drehmoment des Verbrennungsmotors kleiner als oder gleich einem zweiten vorgegebenen Drehmomentwert ist, der Absolutwert der Differenz zwischen dem von dem Drehmomentverteilungsmodul des Fahrzeugs im parallelen Fahrmodus ausgegebenen Solldrehmoment des Generators und dem Ist-Drehmoment des Generators kleiner als oder gleich einem dritten vorgegebenen Drehmomentwert ist und der Absolutwert der Differenz zwischen dem von dem Drehmomentverteilungsmodul des Fahrzeugs im parallelen Fahrmodus ausgegebenen Solldrehmoment des Antriebsmotors und dem Ist-Drehmoment des Antriebsmotors kleiner als oder gleich einem vierten vorgegebenen Drehmomentwert ist, Bestimmen, dass das Umschalten des Fahrzeugs von dem seriellen Fahrmodus in den parallelen Fahrmodus abgeschlossen ist.

7. Verfahren zur Steuerung des Umschaltens zwischen einem seriellen und einem parallelen Fahrmodus eines Hybridfahrzeugs nach Anspruch 1, **dadurch gekennzeichnet, dass** das Solldrehmoment P3TqReq des Antriebsmotors während des Umschaltens zwischen dem seriellen und dem parallelen Fahrmodus anhand der folgenden Formel berechnet wird: 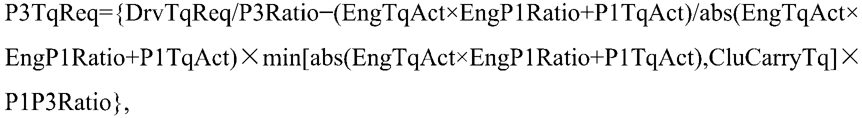 P3TqReq={DrvTqReq/P3Ratio-(EngTqAct×EngP1Ratio+P1TqAct)/abs(EngTqAct× EngP1Ratio+P1TqAct)×min[abs(EngTqAct×EngP1Ratio+P1TqAct),CluCarryTq]× P1P3Ratio},
wobei DrvTqReq das vom Fahrer angeforderte Drehmoment ist, das durch eine Tabellenabfrage anhand der Fahrzeuggeschwindigkeit und des Öffnungsgrads des Fahrpedals ermittelt wird; P3Ratio das Drehzahlverhältnis des Antriebsmotors zur Radseite ist; EngTqAct das Ist-Drehmoment des Verbrennungsmotors ist; EngP1Ratio das Drehzahlverhältnis des Verbrennungsmotors zum Generator ist; P1TqAct das Ist-Drehmoment des Generators ist; P1P3Ratio das Drehzahlverhältnis des Generators zum Antriebsmotor ist; und CluCarryTq ein von der Kupplung übertragbares Drehmoment ist, wobei das von der Kupplung übertragbare Drehmoment CluCarryTq durch eine Tabellenabfrage anhand einer Kupplungsöldruck-Kennlinie ermittelt wird, die einen Zusammenhang zwischen dem Ist-Öldruck der Kupplung und dem von der Kupplung übertragbaren Drehmoment CluCarryTq kennzeichnet.

8. Verfahren zur Steuerung des Umschaltens zwischen einem seriellen und einem parallelen Fahrmodus eines Hybridfahrzeugs nach Anspruch 5, **dadurch gekennzeichnet, dass** das Verfahren nach dem Einstellen des Solldrehmoments des Verbrennungsmotors, des Solldrehmoments des Generators, des Solldrehmoments des Antriebsmotors und der Solldrehzahl des Generators ferner den folgenden Schritt umfasst:
wenn der Absolutwert der Differenz zwischen dem von dem
Drehmomentverteilungsmodul des Fahrzeugs im seriellen Fahrmodus ausgegebenen Solldrehmoment des Verbrennungsmotors und dem Ist-Drehmoment des Verbrennungsmotors kleiner als oder gleich einem achten vorgegebenen Drehmomentwert ist, der Absolutwert der Differenz zwischen der von dem Drehmomentverteilungsmodul des Fahrzeugs im seriellen Fahrmodus ausgegebenen Solldrehzahl des Generators und der Ist-Drehzahl des Generators kleiner als oder gleich einem achten vorgegebenen Drehzahlwert ist und der Absolutwert der Differenz zwischen dem von dem Drehmomentverteilungsmodul des Fahrzeugs im seriellen Fahrmodus ausgegebenen Solldrehmoment des Antriebsmotors und dem Ist-Drehmoment des Antriebsmotors kleiner als oder gleich einem neunten vorgegebenen Drehmomentwert ist, Bestimmen, dass das Umschalten des Fahrzeugs von dem parallelen Fahrmodus in den seriellen Fahrmodus abgeschlossen ist.

9. Vorrichtung zur Steuerung des Umschaltens zwischen einem seriellen und einem parallelen Fahrmodus eines Hybridfahrzeugs, wobei ein Hybridsystem des Hybridfahrzeugs zumindest eine Antriebsbatterie, einen Verbrennungsmotor, einen Antriebsmotor, einen Generator und eine Kupplung umfasst, wobei der Verbrennungsmotor mittels der Kupplung mit einer Radseite verbindbar oder von der Radseite trennbar ist, der Antriebsmotor direkt mit der Radseite verbunden ist, der Antriebsmotor mit der Antriebsbatterie verbunden ist, der Generator mit dem Verbrennungsmotor verbunden ist und der Generator mit der Antriebsbatterie und/oder dem Antriebsmotor verbindbar ist, wobei die Vorrichtung umfasst:
ein Parameterlesemodul (101), das dazu eingerichtet ist, bei Empfang einer Anforderung zum Umschalten zwischen dem seriellen und dem parallelen Fahrmodus relevante Parameter des Fahrzeugs und einen aktuellen Fahrmodus des Fahrzeugs einzulesen;
ein Drehmomentvorverarbeitungsmodul (102), das dazu eingerichtet ist, auf Grundlage des aktuellen Fahrmodus des Fahrzeugs und der relevanten Parameter des Fahrzeugs eine Vorverarbeitung der Solldrehmomente des Verbrennungsmotors, des Generators und des Antriebsmotors durchzuführen;
ein Zielfahrmodus-Ermittlungsmodul (103), das dazu eingerichtet ist, auf Grundlage der empfangenen Anforderung zum Umschalten zwischen dem seriellen und dem parallelen Fahrmodus einen Zielfahrmodus des Fahrzeugs zu ermitteln; und
ein Fahrmodus-Umschaltsteuermodul (104), das dazu eingerichtet ist, nach Abschluss der Drehmomentvorverarbeitung das Umschalten des Fahrzeugs zwischen dem seriellen und dem parallelen Fahrmodus anhand der relevanten Parameter, des aktuellen Fahrmodus und des Zielfahrmodus des Fahrzeugs zu steuern;
**dadurch gekennzeichnet, dass**
die relevanten Parameter des Fahrzeugs eine Fahrzeuggeschwindigkeit, einen Öffnungsgrad des Fahrpedals, ein Ist-Drehmoment des Verbrennungsmotors, ein Ist-Drehmoment des Generators, ein aktuelles Solldrehmoment des Verbrennungsmotors, ein aktuelles Solldrehmoment des Generators, ein aktuelles Solldrehmoment des Antriebsmotors, ein maximales generatorisches Drehmoment des Generators, ein maximales Drehmoment des Verbrennungsmotors, ein Drehzahlverhältnis des Verbrennungsmotors zum Generator, ein Drehzahlverhältnis des Generators zum Antriebsmotor, ein Drehzahlverhältnis des Antriebsmotors zur Radseite und einen Öldruck der Kupplung umfassen;
und das Drehmomentvorverarbeitungsmodul (102) umfasst:
eine Einheit (1021) zur Bestimmung des maximal verfügbaren Drehmoments des Verbrennungsmotors, die dazu eingerichtet ist, auf Grundlage des maximalen generatorischen Drehmoments des Generators und des maximalen Drehmoments des Verbrennungsmotors ein maximal verfügbares Drehmoment des Verbrennungsmotors während des Umschaltens zwischen dem seriellen und dem parallelen Fahrmodus zu bestimmen;
eine Einheit (1022) zur Bestimmung der Solldrehmomente des Verbrennungsmotors und des Generators, die dazu eingerichtet ist, auf Grundlage des aktuellen Fahrmodus des Fahrzeugs, des maximal verfügbaren Drehmoments des Verbrennungsmotors während des Umschaltens zwischen dem seriellen und dem parallelen Fahrmodus und des aktuellen Solldrehmoments des Verbrennungsmotors ein Solldrehmoment des Verbrennungsmotors und ein Solldrehmoment des Generators während des Umschaltens zwischen dem seriellen und dem parallelen Fahrmodus zu bestimmen;
eine Einheit (1023) zur Aktualisierung der Solldrehmomentwerte des Verbrennungsmotors und des Generators, die dazu eingerichtet ist, auf Grundlage des aktuellen Fahrmodus des Fahrzeugs sowie des Solldrehmoments des Verbrennungsmotors und des Solldrehmoments des Generators während des Umschaltens zwischen dem seriellen und dem parallelen Fahrmodus einen Wert des aktuellen Solldrehmoments des Verbrennungsmotors und einen Wert des aktuellen Solldrehmoments des Generators zu aktualisieren; und
eine Einheit (1024) zur Bestimmung und Aktualisierung des Solldrehmomentwerts des Antriebsmotors, die dazu eingerichtet ist, auf Grundlage eines vom Fahrer angeforderten Drehmoments, des Drehzahlverhältnisses des Antriebsmotors zur Radseite, des Drehzahlverhältnisses des Verbrennungsmotors zum Generator, des Drehzahlverhältnisses des Generators zum Antriebsmotor, des Ist-Drehmoments des Verbrennungsmotors, des Ist-Drehmoments des Generators und des Öldrucks der Kupplung ein Solldrehmoment des Antriebsmotors während des Umschaltens zwischen dem seriellen und dem parallelen Fahrmodus zu bestimmen und einen Wert des aktuellen Solldrehmoments des Antriebsmotors zu aktualisieren;
wobei das vom Fahrer angeforderte Drehmoment durch eine Tabellenabfrage anhand der Fahrzeuggeschwindigkeit und des Öffnungsgrads des Fahrpedals ermittelt wird.

10. Vorrichtung zur Steuerung des Umschaltens zwischen einem seriellen und einem parallelen Fahrmodus eines Hybridfahrzeugs nach Anspruch 9, **dadurch gekennzeichnet, dass** der Zielfahrmodus einen parallelen Fahrmodus umfasst; die relevanten Parameter des Fahrzeugs ein Ist-Drehmoment des Verbrennungsmotors, eine Ist-Drehzahl des Generators, ein Ist-Drehmoment des Generators, einen Ist-Öldruck der Kupplung und eine aktuelle Solldrehzahl des Generators sowie ein Solldrehmoment des Verbrennungsmotors, ein Solldrehmoment des Generators, ein Solldrehmoment des Antriebsmotors und eine Solldrehzahl des Generators, die im parallelen Fahrmodus von einem Drehmomentverteilungsmodul des Fahrzeugs ausgegeben sind, umfassen; und, wenn der Zielfahrmodus der parallele Fahrmodus ist, das Fahrmodus-Umschaltsteuermodul (104) umfasst:
eine Drehzahlsynchronisierungseinheit (1041) des Generators, die dazu eingerichtet ist, in eine Drehzahlsynchronisierungsphase des Generators überzugehen, wobei das Ist-Drehmoment des Generators auf das Solldrehmoment des Generators eingestellt wird und die aktuelle Solldrehzahl des Generators schrittweise auf eine Soll-Synchrondrehzahl des Generators eingestellt wird;
eine Kupplungsschließeinheit (1042), die dazu eingerichtet ist, in eine Kupplungsschließphase zum Steuern des Schließens der Kupplung überzugehen, wenn während der Drehzahlsynchronisierungsphase des Generators der Absolutwert einer Differenz zwischen der Soll-Synchrondrehzahl des Generators und der Ist-Drehzahl des Generators kleiner als ein erster vorgegebener Drehzahlwert wird; und eine Drehmomentwiederherstellungseinheit (1043), die dazu eingerichtet ist, in eine Drehmomentwiederherstellungsphase überzugehen, wenn nach Abschluss der Steuerung des Schließens der Kupplung der Ist-Öldruck der Kupplung größer als oder gleich einem ersten vorgegebenen Öldruck wird, wobei ein Steuerungsmodus des Generators von einer Drehzahlregelung auf eine Drehmomentregelung umgestellt wird und die Werte des Solldrehmoments des Verbrennungsmotors, des Solldrehmoments des Generators, des Solldrehmoments des Antriebsmotors und der Solldrehzahl des Generators während des Umschaltens zwischen dem seriellen und dem parallelen Fahrmodus jeweils auf das Solldrehmoment des Verbrennungsmotors, das Solldrehmoment des Generators, das Solldrehmoment des Antriebsmotors beziehungsweise die Solldrehzahl des Generators eingestellt werden, die von dem Drehmomentverteilungsmodul des Fahrzeugs im parallelen Fahrmodus ausgegeben werden.

11. Vorrichtung zur Steuerung des Umschaltens zwischen einem seriellen und einem parallelen Fahrmodus eines Hybridfahrzeugs nach Anspruch 9, **dadurch gekennzeichnet, dass** der Zielfahrmodus einen seriellen Fahrmodus umfasst; die relevanten Parameter des Fahrzeugs ein Ist-Drehmoment des Verbrennungsmotors, ein Ist-Drehmoment des Generators, eine Ist-Drehzahl des Generators, einen Ist-Öldruck der Kupplung, ein Drehzahlverhältnis des Verbrennungsmotors zum Generator sowie ein Solldrehmoment des Verbrennungsmotors, ein Solldrehmoment des Generators, ein Solldrehmoment des Antriebsmotors und eine Solldrehzahl des Generators umfassen, die von einem Drehmomentverteilungsmodul des Fahrzeugs im seriellen Fahrmodus ausgegeben werden; und, wenn der Zielfahrmodus der serielle Fahrmodus ist, das Fahrmodus-Umschaltsteuermodul (104) umfasst:
eine Drehmomentaustauscheinheit (1044), die dazu eingerichtet ist, in eine Drehmomentaustauschphase überzugehen, wobei das Solldrehmoment des Generators schrittweise von dem Solldrehmoment des Generators während des Umschaltens zwischen dem seriellen und dem parallelen Fahrmodus auf das Produkt aus dem negativen Wert des Solldrehmoments des Verbrennungsmotors während des Umschaltens zwischen dem seriellen und dem parallelen Fahrmodus und dem Drehzahlverhältnis des Verbrennungsmotors zum Generator erhöht wird, gleichzeitig das Solldrehmoment des Antriebsmotors der Änderung nachgeführt wird, um das vom Fahrer angeforderte Drehmoment zu erfüllen, und die Ist-Drehzahl des Generators auf die Solldrehzahl des Generators während des Umschaltens zwischen dem seriellen und dem parallelen Fahrmodus eingestellt wird;
eine Kupplungstrenneinheit (1045), die dazu eingerichtet ist, in eine Kupplungstrennphase zum Steuern des Trennens der Kupplung überzugehen, wenn während der Drehmomentaustauschphase der Absolutwert der Summe aus dem Ist-Drehmoment des Verbrennungsmotors und dem Ist-Drehmoment des Generators kleiner als oder gleich einem sechsten vorgegebenen Drehmomentwert wird; und
eine Drehzahl- und Drehmomentwiederherstellungseinheit (1046), die dazu eingerichtet ist, in eine Drehzahl- und Drehmomentwiederherstellungsphase überzugehen, wenn nach Abschluss der Steuerung des Trennens der Kupplung der Ist-Öldruck der Kupplung kleiner als oder gleich einem zweiten vorgegebenen Öldruck wird, wobei ein Steuerungsmodus des Generators von einer Drehmomentregelung auf eine Drehzahlregelung umgestellt wird und die Werte des Solldrehmoments des Verbrennungsmotors, des Solldrehmoments des Generators, des Solldrehmoments des Antriebsmotors und der Solldrehzahl des Generators während des Umschaltens zwischen dem seriellen und dem parallelen Fahrmodus jeweils auf das Solldrehmoment des Verbrennungsmotors, das Solldrehmoment des Generators, das Solldrehmoment des Antriebsmotors beziehungsweise die Solldrehzahl des Generators eingestellt werden, die von dem Drehmomentverteilungsmodul des Fahrzeugs im seriellen Fahrmodus ausgegeben werden.

12. Fahrzeug, **dadurch gekennzeichnet, dass** es die Vorrichtung zur Steuerung des Umschaltens zwischen einem seriellen und einem parallelen Fahrmodus eines Hybridfahrzeugs nach einem der Ansprüche 9 bis 11 umfasst.

## Revendications

1. Procédé pour commander la commutation entre les modes de conduite en série et en parallèle d'un véhicule hybride, dans lequel un système hybride du véhicule hybride comprend au moins une batterie électrique, un moteur thermique, un moteur d'entraînement, un générateur électrique et un embrayage, dans lequel le moteur thermique peut être connecté ou déconnecté à une extrémité d'une roue par l'embrayage, le moteur d'entraînement est directement connecté à l'extrémité de la roue, le moteur d'entraînement est directement connecté à la batterie électrique, le générateur électrique est connecté au moteur thermique, le générateur électrique est connecté à la batterie électrique et/ou au moteur d'entraînement, et le procédé comprend :
lire les paramètres pertinents du véhicule et un mode de conduite courant du véhicule lors de la réception d'une demande de commutation en série-parallèle ;
effectuer un prétraitement du couple cible sur le moteur thermique, le générateur électrique et le moteur d'entraînement en fonction du mode de conduite courant du véhicule et les paramètres pertinents du véhicule ;
identifier un mode de conduite cible du véhicule en fonction de la demande de commutation série-parallèle reçue ; et
effectuer, après la fin du prétraitement du couple, la commande de commutation entre les modes de conduite en série et en parallèle du véhicule selon les paramètres concernés, le mode de conduite courant et le mode de conduite cible du véhicule ;
**caractérisé en ce que**
les paramètres pertinents du véhicule comprennent : la vitesse du véhicule, le degré d'ouverture de la pédale d'accélérateur, le couple réel du moteur thermique, le couple réel du générateur électrique, le couple cible courant du moteur thermique, le couple cible courant du générateur électrique, le couple cible courant du moteur d'entraînement, le couple maximal de production électrique du générateur électrique, le couple maximal du moteur thermique, le rapport de vitesse moteur thermique/générateur électrique, le rapport de vitesse générateur électrique/moteur d'entraînement, le rapport de vitesse moteur d'entraînement/extrémité de roue et la pression d'huile de l'embrayage ;
l'étape consistant à effectuer le prétraitement du couple cible sur le moteur thermique, le générateur électrique et le moteur d'entraînement en fonction du mode de conduite courant du véhicule et les paramètres pertinents du véhicule comprend :
déterminer un couple maximal disponible du moteur thermique lors de la commutation en série-parallèle, en fonction du couple maximal de production d'électricité du générateur électrique et du couple maximal du moteur thermique;
déterminer un couple cible du moteur thermique et un couple cible du générateur électrique lors de la commutation en série-parallèle, en fonction du mode de conduite courant du véhicule, du couple maximal disponible du moteur thermique lors de la commutation en série-parallèle et du couple cible courant du moteur thermique ;
mettre à jour une valeur du couple cible courant du moteur thermique et une valeur du couple cible courant du générateur électrique en fonction du mode de conduite courant du véhicule, ainsi que du couple cible du moteur thermique et du couple cible du générateur électrique lors de la commutation en série-parallèle ; et
déterminer un couple cible du moteur d'entraînement lors de la commutation en série-parallèle en fonction du couple requis du conducteur, du rapport de vitesse moteur d'entraînement-extrémité de roue, du rapport de vitesse moteur thermique/générateur électrique, du rapport de vitesse générateur électrique/moteur d'entraînement, du couple réel du moteur thermique, du couple réel du générateur électrique et de la pression d'huile de l'embrayage, et mettre à jour une valeur du couple cible courant du moteur d'entraînement ;
dans lequel le couple requis par le conducteur est obtenu en effectuant une opération de recherche dans une table selon la vitesse du véhicule et le degré d'ouverture de la pédale d'accélérateur.

2. Procédé de commande de commutation entre les modes de conduite en série et en parallèle d'un véhicule hybride selon la revendication 1, **caractérisé en ce que** :
premièrement, une valeur plus petite sélectionnée à partir d'une valeur absolue du couple maximal de production d'électricité du générateur électrique et du couple maximal du moteur thermique est déterminée, puis une somme de la valeur plus petite sélectionnée et d'une première valeur de couple prédéfinie est déterminée comme étant le couple maximal disponible du moteur thermique lors de la commutation en série-parallèle ;
une valeur plus petite sélectionnée à partir du couple maximal disponible du moteur thermique lors de la commutation en série-parallèle et du couple cible courant du moteur thermique est déterminée comme le couple cible du moteur thermique lors de la commutation en série-parallèle ;
si le mode de conduite courant du véhicule est un mode de conduite parallèle, le couple cible du générateur électrique lors de la commutation série-parallèle est déterminé à 0 ; et
si le mode de conduite courant du véhicule est un mode de conduite en série, le couple cible du générateur électrique lors de la commutation en série-parallèle est déterminé comme étant le couple réel du générateur électrique.

3. Procédé de commande de commutation entre les modes de conduite en série et en parallèle d'un véhicule hybride selon la revendication 1 ou 2, **caractérisé en ce que** le mode de conduite cible comprend un mode de conduite parallèle ; les paramètres pertinents du véhicule comprennent : un couple réel du moteur thermique, une vitesse de rotation réelle du générateur électrique, un couple réel du générateur électrique, une pression réelle d'huile de l'embrayage, une vitesse de rotation cible courante du générateur électrique, ainsi qu'un couple cible du moteur thermique, un couple cible du générateur électrique, un couple cible du moteur d'entraînement et une vitesse de rotation cible du générateur électrique qui sont produits par un module de distribution de couple du véhicule en mode conduite parallèle ; et si le mode de conduite cible est le mode de conduite parallèle, l'étape consistant à effectuer le contrôle entre les modes de conduite en série et en parallèle du véhicule selon les paramètres concernés, le mode de conduite courant et le mode de conduite cible du véhicule comprend :
passer à une étape de synchronisation de la vitesse de rotation du générateur électrique, dans laquelle le couple réel du générateur électrique est fixé au couple cible du générateur électrique et la vitesse de rotation cible courante du générateur électrique est progressivement ajustée à une vitesse de rotation synchrone cible du générateur électrique ;
lorsqu'une valeur absolue d'une différence entre la vitesse de rotation synchrone cible du générateur électrique et la vitesse de rotation réelle du générateur électrique devient inférieure à une première valeur de vitesse de rotation prédéfinie dans l'étape de synchronisation de la vitesse de rotation du générateur électrique, on passe à un étage de fermeture d'embrayage pour le contrôle de fermeture ; et
lorsque la pression réelle de l'huile de l'embrayage devient supérieure ou égale à une première pression d'huile prédéfinie après la fin du contrôle de fermeture de l'embrayage, on passe à une étape de récupération du couple, où un mode de contrôle du générateur électrique est converti du contrôle de vitesse de rotation au contrôle du couple, et les valeurs du couple cible du moteur thermique, le couple cible du générateur électrique, le couple cible du moteur d'entraînement et la vitesse de rotation cible du générateur électrique lors de la commutation en série-parallèle sont respectivement ajustés au couple cible du moteur thermique, au couple cible du générateur électrique, au couple cible du moteur d'entraînement et à la vitesse cible de rotation du générateur électrique, qui sont fournis par le module de distribution de couple du véhicule en mode de conduite parallèle.

4. Procédé de commande de commutation entre les modes de conduite en série et en parallèle d'un véhicule hybride selon la revendication 3, **caractérisé en ce que** les paramètres pertinents du véhicule comprennent : une vitesse du véhicule, un rapport de vitesse générateur électrique-extrémité de roue et un diamètre de pneu, dans lequel la vitesse de rotation synchrone cible du générateur électrique est calculée par la formule suivante : $P 1 {Spd}_{Syn} = \frac{VehSpd ∗ 1000 ∗ P 1 Ratio}{60 πD}$ où VehSpd est la vitesse du véhicule, P1Ratio est le rapport de vitesse générateur électrique-extrémité de roue, et D est le diamètre du pneu.

5. Procédé de commande de commutation entre les modes de conduite en série et en parallèle d'un véhicule hybride selon la revendication 1 ou 2, **caractérisé en ce que** le mode de conduite cible comprend un mode de conduite en série ; les paramètres pertinents du véhicule comprennent : un couple réel du moteur thermique, un couple réel du générateur électrique, une vitesse de rotation réelle du générateur électrique, une pression réelle d'huile de l'embrayage, un rapport de vitesse moteur thermique/générateur électrique, ainsi qu'un couple cible du moteur thermique, un couple cible du générateur électrique, un couple cible du moteur d'entraînement et une vitesse de rotation cible du générateur électrique qui sont générés par un module de distribution de couple du véhicule en mode de conduite en série ; et si le mode de conduite cible est le mode de conduite en série, l'étape consistant à effectuer le contrôle entre les modes de conduite en série et en parallèle du véhicule selon les paramètres concernés, le mode de conduite courant et le mode de conduite cible du véhicule comprend :
passer à une étape d'échange de couple, dans lequel le couple cible du générateur électrique est progressivement augmenté à partir du couple cible du générateur électrique lors de la commutation en série-parallèle à une valeur négative du couple cible du moteur lors de la commutation série-parallèle, multipliée par le rapport de vitesse moteur thermique-générateur électrique, et en même temps le couple cible du moteur d'entraînement est ajusté pour suivre le changement afin de correspondre à un couple requis par le conducteur, et la vitesse de rotation réelle du générateur électrique est fixée à la vitesse de rotation cible du générateur électrique lors de la commutation en série-parallèle ;
lorsqu'une valeur absolue d'une somme du couple réel du moteur thermique et du couple réel du générateur électrique devient inférieure ou égale à une sixième valeur de couple prédéfinie à l'étape d'échange de couple, on passe à une étape de déconnexion d'embrayage pour la commande de déconnexion d'embrayage ; et
lorsque la pression réelle de l'huile de l'embrayage devient inférieure ou égale à une deuxième pression d'huile prédéfinie après la fin du contrôle de déconnexion de l'embrayage, passer à une étape de récupération de vitesse de rotation et de couple, dans lequel un mode de contrôle de générateur électrique est converti du contrôle de couple au contrôle de la vitesse de rotation, et les valeurs du couple cible du moteur thermique, du couple cible du générateur électrique, du couple cible du moteur d'entraînement et la vitesse de rotation cible du générateur électrique lors de la commutation en série-parallèle sont respectivement ajustés au couple cible du moteur thermique, au couple cible du générateur électrique, au couple cible du moteur d'entraînement et à la vitesse cible de rotation du générateur électrique, qui sont fournis par le module de distribution de couple du véhicule dans le mode de conduite en série.

6. Procédé de commande de commutation entre les modes de conduite en série et en parallèle d'un véhicule hybride selon la revendication 3, **caractérisé en ce que**, après ajustement des valeurs du couple cible du moteur thermique, du couple cible du générateur électrique, du couple cible du moteur d'entraînement et de la vitesse cible de rotation du générateur électrique, le procédé comprend en outre :
si une valeur absolue d'une différence entre le couple cible du moteur thermique produit par le module de distribution de couple du véhicule en mode de conduite parallèle et le couple réel du moteur thermique est inférieure ou égale à une deuxième valeur de couple prédéfinie, une valeur absolue d'une différence entre le couple cible du générateur électrique produit par le module de distribution de couple du véhicule en mode conduite parallèle et le couple réel du générateur électrique est inférieur ou égal à une troisième valeur de couple prédéfinie, et une valeur absolue d'une différence entre le couple cible du moteur d'entraînement produit par le module de distribution de couple du véhicule en mode de conduite parallèle et le couple réel du moteur d'entraînement est inférieur ou égal à une quatrième valeur de couple prédéfinie, déterminer que le passage du véhicule du mode de conduite en série au mode de conduite parallèle est terminé.

7. Procédé de commande de commutation entre les modes de conduite en série et en parallèle d'un véhicule hybride selon la revendication 1, **caractérisé en ce que** le couple cible P3TqReq du moteur d'entraînement lors de la commutation série-parallèle est calculé par la formule suivante : 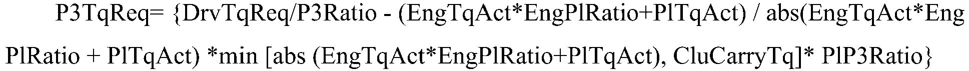 P3TqReq= {DrvTqReq/P3Ratio - (EngTqAct*EngPlRatio+PlTqAct) / abs(EngTqAct*Eng PlRatio + PlTqAct) *min [abs (EngTqAct*EngPlRatio+PlTqAct), CluCarryTq]* PlP3Ratio} où DrvTqReq est le couple requis par le conducteur, obtenu en effectuant une opération de recherche dans un tableau selon la vitesse du véhicule et le degré d'ouverture de la pédale d'accélérateur ; le rapport P3 est le rapport de vitesse moteur d'entraînement-extrémité de roue ; EngTqAct correspond au couple réel du moteur thermique; EngPlRatio est le rapport de vitesse moteur thermique/générateur électrique ; PlTqAct est le couple réel du générateur électrique ; PlP3Ratio est le rapport de vitesse du générateur électrique au moteur d'entraînement ; CluCarryTq est un couple transmissible de l'embrayage ; dans lequel le couple transmissible de l'embrayage CluCarryTq est obtenu en effectuant une opération de recherche dans une table basée sur une courbe caractéristique de pression d'huile caractérisant une relation d'association entre la pression réelle d'huile de l'embrayage et le couple transmissible de l'embrayage CluCarryTq.

8. Procédé de commande de commutation entre les modes de conduite en série et en parallèle d'un véhicule hybride selon la revendication 5, **caractérisé en ce qu'**après ajustement du couple cible du moteur thermique, du couple cible du générateur électrique, du couple cible du moteur d'entraînement et de la vitesse de rotation cible du générateur électrique, le procédé comprend en outre :
si une valeur absolue d'une différence entre le couple cible du moteur thermique fourni par le module de distribution de couple du véhicule en mode de conduite en série et le couple réel du moteur est inférieure ou égale à une huitième valeur de couple prédéfinie, une valeur absolue d'une différence entre la vitesse de rotation cible du générateur électrique produite par le module de distribution de couple du véhicule en mode de conduite en série et la vitesse de rotation réelle du générateur électrique est inférieure ou égale à une huitième valeur de vitesse de rotation prédéfinie, et une valeur absolue d'une différence entre le couple cible du moteur d'entraînement de conduite émis par le module de distribution de couple du véhicule en mode série et le couple réel du moteur d'entraînement est inférieure ou égale à une neuvième valeur de couple prédéfinie, déterminer que le passage du véhicule du mode de conduite parallèle au mode de conduite en série est terminé.

9. Un appareil permettant de commander la commutation entre les modes de conduite en série et en parallèle d'un véhicule hybride, dans lequel un système hybride comprend au moins une batterie électrique, un moteur thermique, un moteur d'entraînement, un générateur électrique et un embrayage, permettant au moteur thermique d'être connecté ou déconnecté d'une extrémité de roue au moyen de l'embrayage, le moteur d'entraînement est directement connecté à l'extrémité de la roue, le moteur d'entraînement est connecté à la batterie électrique, le générateur électrique est connecté au moteur thermique, le générateur électrique est connecté à la batterie électrique et/ou au moteur d'entraînement, et l'appareil comprend :
un module de lecture de paramètres (101) configuré pour lire les paramètres pertinents du véhicule et un mode de conduite courant du véhicule lors de la réception d'une demande de commutation en série-parallèle ;
un module de prétraitement du couple (102) configuré pour effectuer le prétraitement du couple cible sur le moteur thermique, le générateur électrique et le moteur d'entraînement en fonction du mode de conduite courant du véhicule et les paramètres pertinents du véhicule ;
un module d'identification du mode de conduite cible (103) configuré pour identifier un mode de conduite cible du véhicule en fonction de la demande de commutation série-parallèle reçue ; et
un module de contrôle de commutation de mode de conduite (104) configuré, après le prétraitement du couple, pour basculer le contrôle entre les modes de conduite en série et en parallèle du véhicule selon les paramètres concernés, le mode de conduite courant et le mode de conduite cible du véhicule ;
**caractérisé en ce que**
les paramètres pertinents du véhicule comprennent : la vitesse du véhicule, le degré d'ouverture de la pédale d'accélérateur, le couple réel du moteur thermique, le couple réel du générateur électrique, le couple cible courant du moteur thermique, le couple cible courant du générateur électrique, le couple cible courant du moteur d'entraînement, le couple maximal de production électrique du générateur électrique, un couple maximal du moteur thermique, un rapport de vitesse moteur thermique/générateur électrique, un rapport de vitesse générateur électrique/moteur d'entraînement, un rapport de vitesse moteur d'entraînement/extrémité de roue et une pression d'huile de l'embrayage ;
le module de prétraitement de couple comprend :
une unité de détermination du couple maximal disponible du moteur thermique(1021) configurée pour déterminer le couple maximal disponible du moteur thermique lors de la commutation en série-parallèle, basée sur le couple maximal de production d'électricité du générateur électrique et le couple maximal du moteur thermique;
une unité de détermination du couple cible du moteur thermique et du générateur électrique (1022) configurée pour déterminer un couple cible du moteur thermique et un couple cible du générateur électrique lors de la commutation en série-parallèle, en fonction du mode de conduite courant du véhicule, du couple maximal disponible du moteur thermique lors de la commutation en série en parallèle et du couple cible courant du moteur thermique;
une unité de mise à jour de la valeur du couple cible du moteur thermique et du générateur électrique (1023) configurée pour mettre à jour une valeur du couple cible courant du moteur thermique et une valeur du couple cible courant du générateur électrique basée sur le mode de conduite courant du véhicule, ainsi que le couple cible du moteur thermique et le couple cible du générateur électrique lors de la commutation en série-parallèle ; et
une unité de détermination du couple cible et de mise à jour de la valeur du moteur d'entraînement (1024) configurée pour déterminer :
un couple cible du moteur d'entraînement lors de la commutation en série-parallèle, basé sur un couple requis par le conducteur, le rapport de vitesse moteur d'entraînement-extrémité de roue, le rapport de vitesse moteur thermique/générateur électrique, le rapport de vitesse générateur électrique/moteur d'entraînement, le couple réel du moteur thermique, le couple réel du générateur électrique et la pression d'huile de l'embrayage, et la mise à jour d'une valeur du couple cible courant du moteur d'entraînement ;
dans lequel le couple requis du conducteur est obtenu en effectuant une opération de recherche dans une table selon la vitesse du véhicule et le degré d'ouverture de la pédale d'accélérateur.

10. Appareil de contrôle de la commutation entre les modes de conduite en série et en parallèle d'un véhicule hybride selon la revendication 9, **caractérisé en ce que** le mode de conduite cible comprend un mode de conduite parallèle ; les paramètres pertinents du véhicule comprennent :
un couple réel du moteur thermique, une vitesse de rotation réelle du générateur électrique, un couple réel du générateur électrique, une pression réelle d'huile de l'embrayage, une vitesse de rotation cible courante du générateur électrique, ainsi qu'un couple cible du moteur thermique, un couple cible du générateur électrique, un couple cible du moteur d'entraînement et une vitesse cible de rotation du générateur électrique qui sont générés par un couple module de distribution du véhicule en mode de conduite parallèle ; et si le mode de conduite cible est le mode de conduite parallèle, le module de contrôle de commutation de mode de conduite comprend :
une unité de synchronisation de la vitesse de rotation du générateur électrique (1041) configurée pour passer à une étape de synchronisation de la vitesse de rotation du générateur électrique, dans lequel le couple réel du générateur électrique est fixé au couple cible du générateur électrique et la vitesse de rotation cible courante du générateur électrique est progressivement ajustée à une vitesse de rotation synchrone cible du générateur électrique ;
une unité de fermeture d'embrayage (1042) configurée, lorsque la valeur absolue d'une différence entre la vitesse de rotation synchrone cible du générateur électrique et la vitesse de rotation réelle du générateur électrique devient inférieure à une première valeur de vitesse de rotation prédéfinie dans l'étape de synchronisation de la vitesse de rotation du générateur électrique, pour passer à une étape de fermeture d'embrayage pour le contrôle de la fermeture ; et
une unité de récupération de couple (1043) configurée, lorsque la pression réelle d'huile de l'embrayage devient supérieure ou égale à une pression d'huile prédéfinie initiale après la fin du contrôle de fermeture de l'embrayage, pour passer à une étape de récupération de couple, dans lequel un mode de contrôle de générateur électrique est converti du contrôle de vitesse de rotation au contrôle de couple, et les valeurs du couple cible du moteur thermique, le couple cible du générateur électrique, le couple cible du moteur d'entraînement et la vitesse de rotation cible du générateur électrique lors de la commutation en série-parallèle sont respectivement ajustés au couple cible du moteur thermique, au couple cible du générateur électrique, au couple cible du moteur d'entraînement et à la vitesse cible de rotation du générateur électrique, qui sont fournis par le module de distribution de couple du véhicule en mode de conduite parallèle.

11. Appareil de contrôle de la commutation entre les modes de conduite en série et en parallèle d'un véhicule hybride selon la revendication 9, **caractérisé en ce que** le mode de conduite cible comprend un mode de conduite en série ; les paramètres pertinents du véhicule comprennent : un couple réel du moteur thermique, un couple réel du générateur électrique, une vitesse de rotation réelle du générateur électrique, une pression réelle d'huile de l'embrayage, un rapport de vitesse moteur thermique/générateur électrique, ainsi qu'un couple cible du moteur thermique, un couple cible du générateur électrique, un couple cible du moteur d'entraînement et une vitesse de rotation cible du générateur électrique qui sont générés par un module de distribution de couple du véhicule en mode de conduite en série ; et si le mode de conduite cible est le mode de conduite en série, le module de contrôle de commutation du mode de conduite comprend :
une unité d'échange de couple (1044) configurée pour passer à une étape d'échange de couple dans laquelle le couple cible du générateur électrique est progressivement augmenté à partir du couple cible du générateur électrique lors de la commutation en série-parallèle à une valeur négative du couple cible du moteur lors de la commutation en série-parallèle, multipliée par le rapport de vitesse moteur thermique/générateur électrique, et en même temps que le couple cible du moteur d'entraînement est ajusté pour suivre le changement pour répondre au couple requis du conducteur, et la vitesse de rotation réelle du générateur électrique est fixée à la vitesse cible de rotation du générateur électrique lors de la commutation en série-parallèle ;
une unité de déconnexion d'embrayage (1045) configurée, lorsque la valeur absolue d'une somme du couple réel du moteur thermique et du couple réel du générateur électrique devient inférieure ou égale à une sixième valeur de couple prédéfinie à l'étape d'échange de couple, pour passer à une étape de déconnexion d'embrayage pour le contrôle de la déconnexion ; et
une unité de récupération de vitesse de rotation et de couple (1046) configurée, lorsque la pression réelle d'huile de l'embrayage devient inférieure ou égale à une deuxième de pression d'huile prédéfinie après la fin du contrôle de déconnexion de l'embrayage, pour passer à une étape de récupération de vitesse de rotation et de couple, dans lequel un mode de contrôle de générateur électrique est converti du contrôle de couple au contrôle de vitesse de rotation, et les valeurs du couple cible du moteur thermique, du couple cible du générateur électrique, du couple cible du moteur d'entraînement et de la vitesse de rotation cible du générateur électrique lors de la commutation en série-parallèle sont respectivement ajustées au couple cible du moteur thermique, au couple cible du générateur électrique, au couple cible du moteur d'entraînement et à la vitesse cible de rotation du générateur électrique qui sont fournis par le couple module de distribution du véhicule en mode de conduite en série.

12. Véhicule, **caractérisé en ce qu'**il comprend l'appareil permettant de commander la commutation entre les modes de conduite en série et en parallèle d'un véhicule hybride selon l'une des revendications 9 à 11.
